(19) Europäisches Patentamt
European Patent Office
Office européen des brevets

(11) **EP 2 570 977 A1**

(12) **EUROPEAN PATENT APPLICATION**
published in accordance with Art. 153(4) EPC

(43) Date of publication:
**20.03.2013 Bulletin 2013/12**

(51) Int Cl.:
***G06Q 10/00*** (2012.01)   ***H02J 13/00*** (2006.01)

(21) Application number: **11780390.8**

(22) Date of filing: **11.05.2011**

(86) International application number:
**PCT/JP2011/002630**

(87) International publication number:
**WO 2011/142131 (17.11.2011 Gazette 2011/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2010   JP 2010108874**
**11.05.2010   JP 2010108873**

(71) Applicant: **Panasonic Corporation**
**Kadoma-shi**
**Osaka 571-8501 (JP)**

(72) Inventors:
• **KOUDA, Tetsuya**
**Osaka 540-6207 (JP)**

• **TSUJIMURA, Satoshi**
**Osaka 540-6207 (JP)**
• **NAKATANI, Naofumi**
**Osaka 540-6207 (JP)**
• **IKEDA, Toshihisa**
**Osaka 540-6207 (JP)**
• **YOSHIMURA, Yasuo**
**Osaka 540-6207 (JP)**
• **KURIMOTO, Kazunori**
**Osaka 540-6207 (JP)**

(74) Representative: **Schwabe - Sandmair - Marx**
**Patentanwälte**
**Stuntzstraße 16**
**81677 München (DE)**

(54) **ELECTRICAL DEVICE CONTROL SYSTEM, SERVER, ELECTRICAL DEVICE, AND ELECTRICAL DEVICE CONTROL METHOD**

(57)   An input accepting unit (201) accepts an input of desired time information showing a desired operation start time or a desired operation end time of a household electrical appliance (200), a sending unit (203) sends, to a server (100), the desired time information, and electric power information showing an electric power required for the household electrical appliance (200) to be operated, a server receiving unit (101) receives the desired time information and the electric power information, an electric power charge information acquiring unit (105) acquires electric power charge information showing an electric power charge which changes per hour, an operation time computing unit (103) computes an operation start time or an operation end time of the household electrical appliance (200) based on the desired time information, the electric power information, and the electric power charge information, a server sending unit (102) sends the operation start time or the operation end time to the household electrical appliance (200), and an operation control unit (206) starts the operation of the household electrical appliance (200) according to the operation start time or the operation end time. With this configuration, equalization of the electric power load and reduction of the electricity bill can be realized in real-time.

FIG.6

**Description**

Technical Field

The present invention relates to an electrical device control system comprising an electrical device and a server that is communicably connected to the electrical device, a server that is communicably connected to the electrical device, an electrical device, and an electrical device control method performed by the electrical device control system.

Background Art

It is typical for a conventional electric water heater or a heat pump water heater to prepare hot water to be stored in a hot water tank at night when the amount of power consumption is small, and allow the use of the hot water in the hot water tank during the day (for example, refer to Patent Literature 1).

According to the foregoing configuration, since electric power is consumed at night when the amount of power consumption is less in comparison to daytime use, equalization of the electric power load in a given period (for example, one day) is possible. Moreover, by using late-night electric power in which the electric power charge is inexpensive, the user can reduce the electricity bill to be charged.

Moreover, the environmental situation of electricity usage may change considerably in the future due to the popularization of solar cells, installation of storage cells, and development of new household electrical appliances, whereby the pricing system may also change to real-time pricing in which the electric power charge changes in real-time.

As a method for the further equalization of the electric power load and reduction of the electricity bill according to the usage of the electrical device, proposed is a control system which achieves equalization of the electric power load and reduction of the electricity bill by connecting household electrical appliances such as a refrigerator, a washing machine, a rice cooker and the like to a home server via a network and causing the home server to change the usage time span of the household electrical appliances, in addition to the night-time use of equipment and appliances such as a conventional electric water heater or a heat pump water (for example, refer to Patent Literature 2).

This control system is a system in which a home server or an input device accepts an input from a user regarding the desired usage time, the home server creates an optimal usage time span plan in consideration of the input usage time and the characteristics of the household electrical appliance, and controls the household electrical appliance according to the created usage time span plan.

With a conventional control system, since a home server or an input device is used to input the user's desired usage time and the optimal usage time span plan is created in consideration of the input usage time, equalization of the electric power load and reduction of the electricity bill can be realized without impairing the user's comfort.

Nevertheless, with a conventional control system, even in cases where the time to the completion of operation is changed as a result of the operating condition being changed midway during the operation, since the usage time span plan is created according to the time stored in the home server, there were cases where effective equalization of the electric power load and reduction of the electricity bill could not be realized since the optimal usage time span plan after the change could not be created.

Moreover, when a new household electrical appliance is introduced, since the home server has not data regarding the usage time of the new household electrical appliance, it is not possible to create a usage time span plan, and equalization of the electric power load and reduction of the electricity bill could not be achieved. In addition, when this system is actually used by a user, to explain a case where the household electrical appliance is a washer-dryer, the user needs to select the operating condition among thorough washing program, standard program, drying only, and so on with the washer-dryer, move to the location of the home server or the input device, and input the desired usage time in the home server or the input device. Thus, there is a problem in that the user has to go through the trouble of performing operations at two locations; namely, the location where the washer-dryer is installed, and the location where the home server or the input device is installed.

Citation List

Patent Literature

Patent Literature 1: Japanese Examined Patent Publication No. H02-052778
Patent Literature 2: Japanese Patent Application Publication No. 2008-67473

**EP 2 570 977 A1**

Summary of Invention

The present invention was devised to resolve the foregoing problems, and an object of this invention is to provide an electrical device control system, a server, an electrical device and an electrical device control method capable of realizing the equalization of the electric power load and the reduction of the electricity bill in real-time.

The electrical device control system according to one aspect of the present invention is an electrical device control system comprising an electrical device, and a server which is communicably connected to the electrical device, wherein the electrical device includes an input accepting unit for accepting an input of desired time information showing a desired operation start time or a desired operation end time of the electrical device, an electrical device-side sending unit for sending, to the server, the desired time information accepted by the input accepting unit, and electric power information showing an electric power required for the electrical device to be operated, and an operation control unit for controlling the operation of the electrical device, wherein the server includes a server-side receiving unit for receiving the desired time information and the electric power information sent by the electrical device-side sending unit, an electric power charge information acquiring unit for acquiring electric power charge information showing an electric power charge which changes per hour, a computing unit for computing an operation start time or an operation end time of the electrical device based on the desired time information and the electric power information received by the server-side receiving unit, and the electric power charge information acquired by the electric power charge information acquiring unit, and a server-side sending unit for sending, to the electrical device, the operation start time or the operation end time computed by the computing unit, and wherein the operation control unit starts the operation of the electrical device according to the operation start time or the operation end time sent by the server-side sending unit.

According to the foregoing configuration, the input accepting unit accepts an input of desired time information showing a desired operation start time or a desired operation end time of the electrical device. The electrical device-side sending unit sends, to the server, the desired time information accepted by the input accepting unit, and electric power information showing an electric power required for the electrical device to be operated. The operation control unit controls the operation of the electrical device. The server-side receiving unit receives the desired time information and the electric power information sent by the electrical device-side sending unit. The electric power charge information acquiring unit acquires electric power charge information showing an electric power charge which changes per hour. The computing unit computes an operation start time or an operation end time of the electrical device based on the desired time information and the electric power information received by the server-side receiving unit, and the electric power charge information acquired by the electric power charge information acquiring unit. The server-side sending unit sends, to the electrical device, the operation start time or the operation end time computed by the computing unit. The operation control unit starts the operation of the electrical device according to the operation start time or the operation end time sent by the server-side sending unit.

According to the present invention, since the desired time information showing the desired operation start time or the desired operation end time of the electrical device and the electric power information showing the electric power required for the electrical device to be operated are received, and the operation start time or the operation end time of the electrical device is computed based on the received desired time information, electric power information and electric power charge information, even if the desired time information and the electric power information are changed, it is possible to compute the operation start time or the operation end time corresponding to the changed desired time information and electric power information, and equalization of the electric power load and reduction of the electricity bill can be realized in real-time.

Brief Description of Drawings

[Fig. 1] Fig. 1 is a diagram showing the schematic configuration of the household electrical appliance network system in Embodiment 1 of the present invention.
[Fig. 2] Fig. 2 is a diagram showing the signals that are communicated between the server and the household electrical appliance in Embodiment 1 of the present invention.
[Fig. 3] Fig. 3 is a diagram explaining the processing performed by the server for determining the optimal operation start time of the household electrical appliance in Embodiment 1 of the present invention.
[Fig. 4] Fig. 4 is a diagram explaining the processing performed by the server for determining the optimal operation start time of the household electrical appliance in Embodiment 1 of the present invention.
[Fig. 5] Fig. 5 is a diagram explaining the processing performed by the server for determining the optimal operation start time of the household electrical appliance in Embodiment 1 of the present invention.
[Fig. 6] Fig. 6 is a diagram showing the configuration of the server and the household electrical appliance in Embodiment 1 of the present invention.

[Fig. 7] Fig. 7 is a diagram showing a display example of the method of inputting the desired operation end time into the input accepting unit in Embodiment 1 of the present invention.

[Fig. 8] Fig. 8 is a diagram showing a display example of the method of inputting the desired operation end time into the input accepting unit in Embodiment 1 of the present invention.

[Fig. 9] Fig. 9 is a flowchart explaining the operation of the server in Embodiment 1 of the present invention.

[Fig. 10] Fig. 10 is a flowchart explaining the operation of the household electrical appliance in Embodiment 1 of the present invention.

[Fig. 11] Fig. 11 is a diagram showing the change in the power consumption when the wash program is a standard program and the weight of the clothes to be washed is 3 kg.

[Fig. 12] Fig. 12 is a diagram showing the change in the power consumption when the wash program is a standard program and the weight of the clothes to be washed is 5 kg.

[Fig. 13] Fig. 13 is a diagram showing the change in the power consumption when the wash program is a cleaning program and the weight of the clothes to be washed is 3 kg.

[Fig. 14] Fig. 14 is a diagram showing the configuration of the household electrical appliance in Embodiment 2 of the present invention.

[Fig. 15] Fig. 15 is a diagram showing a display example displaying the optimal operation start time on the display unit in Embodiment 2 of the present invention.

[Fig. 16] Fig. 16 is a diagram showing a display example displaying the time up to the optimal operation start time on the display unit in Embodiment 2 of the present invention.

[Fig. 17] Fig. 17 is a flowchart showing the operation of the server in Embodiment 2 of the present invention.

[Fig. 18] Fig. 18 is a flowchart showing the operation of the server in a modified example of Embodiment 2 of the present invention.

[Fig. 19] Fig. 19 is a diagram showing the signals that are communicated between the server and the household electrical appliance in Embodiment 3 of the present invention.

[Fig. 20] Fig. 20 is a diagram explaining the processing performed by the server for determining the optimal operation start time of the household electrical appliance in Embodiment 3 of the present invention.

[Fig. 21] Fig. 21 is a diagram explaining the processing performed by the server for determining the optimal operation start time of the household electrical appliance in Embodiment 3 of the present invention.

[Fig. 22] Fig. 22 is a diagram explaining the processing performed by the server for determining the optimal operation start time of the household electrical appliance in Embodiment 3 of the present invention.

[Fig. 23] Fig. 23 is a diagram showing the configuration of the server and the household electrical appliance in Embodiment 3 of the present invention.

[Fig. 24] Fig. 24 is a diagram showing a display example of the method of inputting the desired operation end time into the input accepting unit in Embodiment 3 of the present invention.

[Fig. 25] Fig. 25 is a diagram showing a display example of the method of inputting the tolerance level information into the input accepting unit in Embodiment 3 of the present invention.

[Fig. 26] Fig. 26 is a flowchart explaining the operation of the server in Embodiment 3 of the present invention.

[Fig. 27] Fig. 27 is a flowchart explaining the operation of the household electrical appliance in Embodiment 3 of the present invention.

[Fig. 28] Fig. 28 is a diagram showing the change in the power consumption when the wash program is a standard program and the weight of the clothes to be washed is 3 kg.

[Fig. 29] Fig. 29 is a diagram showing the change in the power consumption when the wash program is a standard program and the weight of the clothes to be washed is 5 kg.

[Fig. 30] Fig. 30 is a diagram showing the change in the power consumption when the wash program is a cleaning program and the weight of the clothes to be washed is 3 kg.

Description of Embodiments

Embodiments of the present invention are now explained with reference to the drawings. Note that the present invention shall not be limited by these Embodiments.

(Embodiment 1)

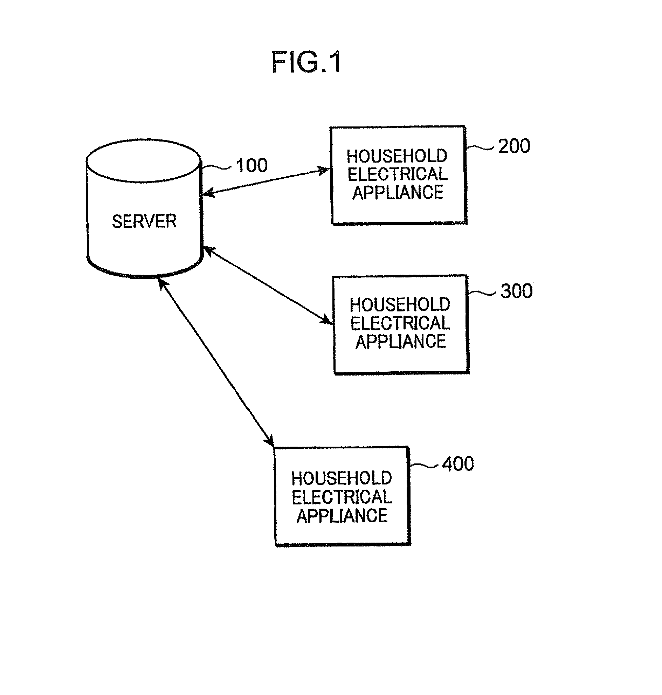

Fig. 1 is a diagram showing the schematic configuration of the household electrical appliance network system in Embodiment 1 of the present invention. As shown in Fig. 1, the household electrical appliance network system comprises a server 100, and a plurality of household electrical appliances 200, 300, 400. The server 100 and the plurality of household electrical appliances 200, 300, 400 mutually connected communicably via a wireless network or a wired network.

The household electrical appliances 200, 300, 400 are, for example, a washer-dryer, a rice cooker, an electric hot water system, a dishwasher and the like. Note that, while three household electrical appliances 200, 300, 400 are connected to the server 100 in Fig. 1, the present invention is not limited thereto, and four or more household electrical appliances or one household electrical appliance may also be connected to the server 100. The household electrical appliance network system corresponds to an example of the electrical device control system, and the household electrical appliances 200, 300, 400 correspond to an example of the electrical device.

In Embodiment 1, the server 100 and the plurality of household electrical appliances 200, 300, 400 are explained as equipment to be installed inside the user's home, but the server 100 may be installed outside. Moreover, the processing to be performed by the server 100 as explained below may be performed by the household electrical appliance inside the home, and the household electrical appliance inside the home may include the function of the server 100.

Moreover, while the configuration and operation of the household electrical appliance 200 are described in the ensuing explanation, the foregoing configuration and operation may also be similarly applied to the household electrical appliance 300 and the household electrical appliance 400, and the explanation thereof is omitted.

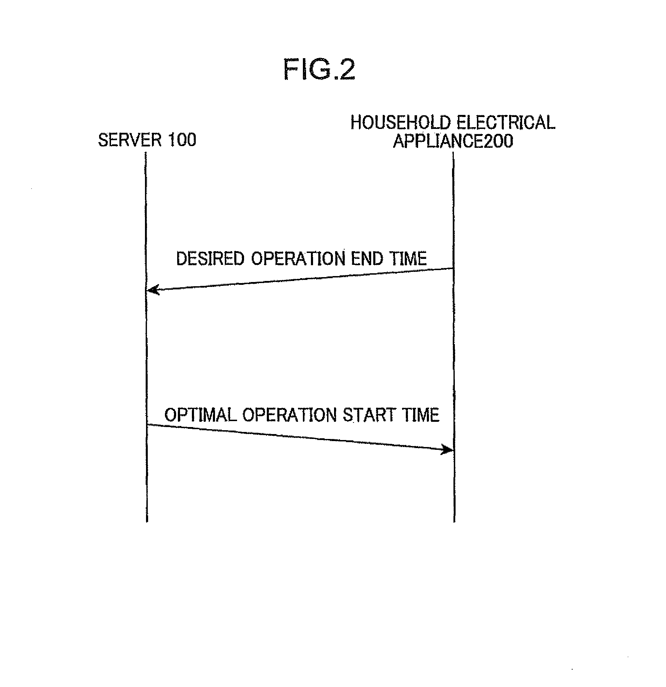

Fig. 2 is a diagram showing the signals that are communicated between the server 100 and the household electrical appliance 200 in Embodiment 1 of the present invention. As shown in Fig. 2, the household electrical appliance 200 sends a desired operation end time to the server 100. Subsequently, the server 100 that received the desired operation end time computes an optimal operation start time of the household electrical appliance 200 so that the operation will end at the desired operation end time, and sends the optimal operation start time to the household electrical appliance 200. Subsequently, the household electrical appliance 200 starts the operation according to the optimal operation start time sent from the server 100.

Note that, while the household electrical appliance 200 sends the desired operation end time, which is desired by the user, to the server 100 in the ensuing explanation, the present invention is not limited thereto, and the household electrical appliance 200 may also send, in substitute for the desired operation end time, the desired operation start time, which is desired by the user, to the server 100. Moreover, upon sending the desired operation end time, the household electrical appliance 200 may also send, together with the desired operation end time, operation period information representing the operation period for which the household electrical appliance 200 needs to be operated, and electric power information representing the electric power required for the household electrical appliance 200 to be operated. Note that the desired operation end time and the desired operation start time may be mutually converted easily based on the operation period information representing the operation period for which the household electrical appliance 200 needs to be operated.

Moreover, while the server 100 sends the optimal operation start time to the household electrical appliance 200 in the ensuing explanation, the present invention is not limited thereto, and the server 100 may send the optimal operation end time to the household electrical appliance 200 in substitute for the optimal operation start time. Note that the optimal operation end time and the optimal operation start time may be mutually converted easily based on the operation period information representing the operation period for which the household electrical appliance 200 needs to be operated.

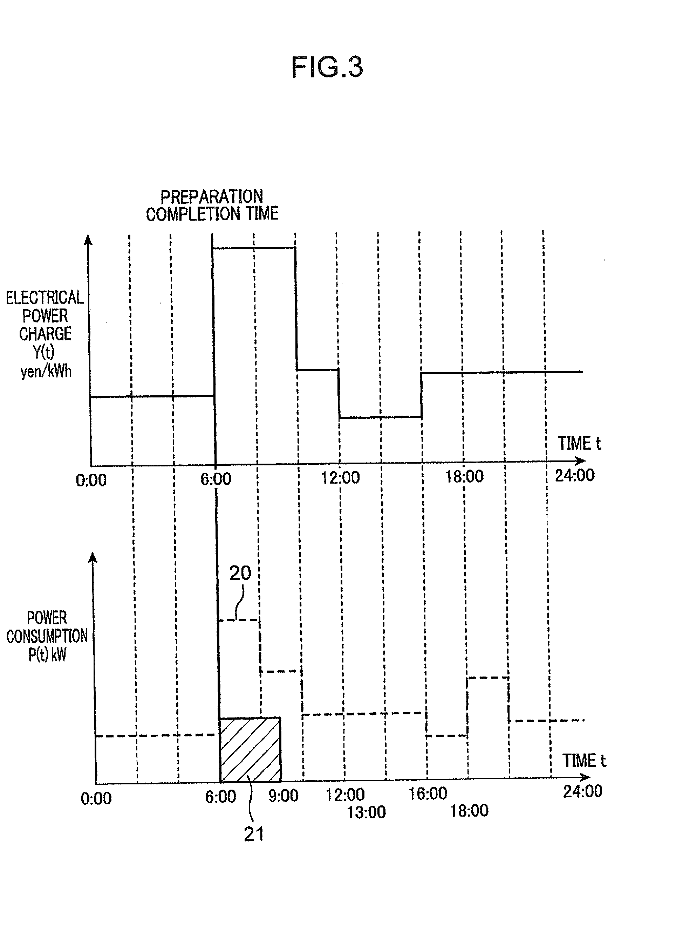

The processing performed by the server 100 to determine the optimal operation start time of the household electrical appliance 200 is now explained with reference to Fig. 3 to Fig. 5.

Fig. 3 to Fig. 5 are diagrams explaining the processing performed by the server 100 for determining the optimal operation start time of the household electrical appliance 200 in Embodiment 1 of the present invention. The upper diagrams of Fig. 3, Fig. 4 and Fig. 5 are diagrams showing the time change of the electric power charge $Y(t)$ of one day. Moreover, the lower diagrams of Fig. 3, Fig. 4 and Fig. 5 are diagrams showing the change of the power consumption $P(t)$ of one day. The horizontal axis of the upper diagrams of Fig. 3, Fig. 4 and Fig. 5 represent the time $t$, and the vertical axis represents the electric power charge $Y(t)$ yen/kWh. Moreover, the horizontal axis of the lower diagrams of Fig. 3, Fig. 4 and Fig. 5 represent the time $t$, and the vertical axis represents the power consumption $P(t)$ kW of the entire home, or the plurality of household electrical appliances connected to the server 100. Moreover, in Fig. 3 to Fig. 5, let it be assumed that the operation period showing the operating time of the household electrical appliance 200 is 3 hours.

As shown in the upper diagrams of Fig. 3, Fig. 4 and Fig. 5, the electric power charge $Y(t)$ changes depending on the time. If an electric power supply source such as solar cells or fuel cells is installed, or if storage cells are installed in the home where the household electrical appliance is installed, the domestic electricity supply system will considerably change. Thus, the electric power charge $Y(t)$ shown in the upper diagrams of Fig. 3, Fig. 4 and Fig. 5 reflects the real-time pricing in which the electric power charge changes in real-time.

Real-time pricing generally shows the electric power charge $Y(t)$ that is notified from the electric power company in advance. Moreover, in addition to the electric power charge notified by the electric power company, in certain cases the electric power charge $Y(t)$ also shows the electric power charge $Y(t)$ that is prepared based on the past performance of device operation information for operating the domestic power-generating equipment, batteries and the like, power purchase price information, and power selling price information.

In order to realize the effects of the present invention, in addition to the electric power charge notified by the electric power company, the electric power charge Y(t) may also be the electric power charge, which accommodates only a certain household, prepared based on the past performance of device operation information, power purchase price information, power selling price information, and so on. As far as the electric power charge Y(t) which depends on the time t shown in Fig. 3, Fig. 4 and Fig. 5 can be known, and any method may be used for acquiring information of the electric power charge Y(t).

If the solar cells installed in the home are of a small scale, the excess electricity needs to be purchased with a system from the electric power company. Thus, the change in the electric power charge Y(t) may depend on the power consumption P(t). Nevertheless, for the sake of convenience in the ensuing explanation, let it be assumed that the change in the electric power charge Y(t) is not dependent on the power consumption P(t).

In Fig. 3, the total electricity bill Yt of one day can be obtained with Formula (1) below.

[Mathematical Formula 1]

$$Yt = \int_{t=0:00}^{24:00} (Y(t) \times P(t)) dt \qquad \cdots (1)$$

However, the integral range in Formula (1) above shall be from 0:00 to 24:00. Based on Formula (1) above, in order to reduce the total electricity bill Yt of one day, it can be seen that the best method is to use the household electrical appliance when the electric power charge Y(t) is cheaper, in addition to reducing the power consumption P(t).

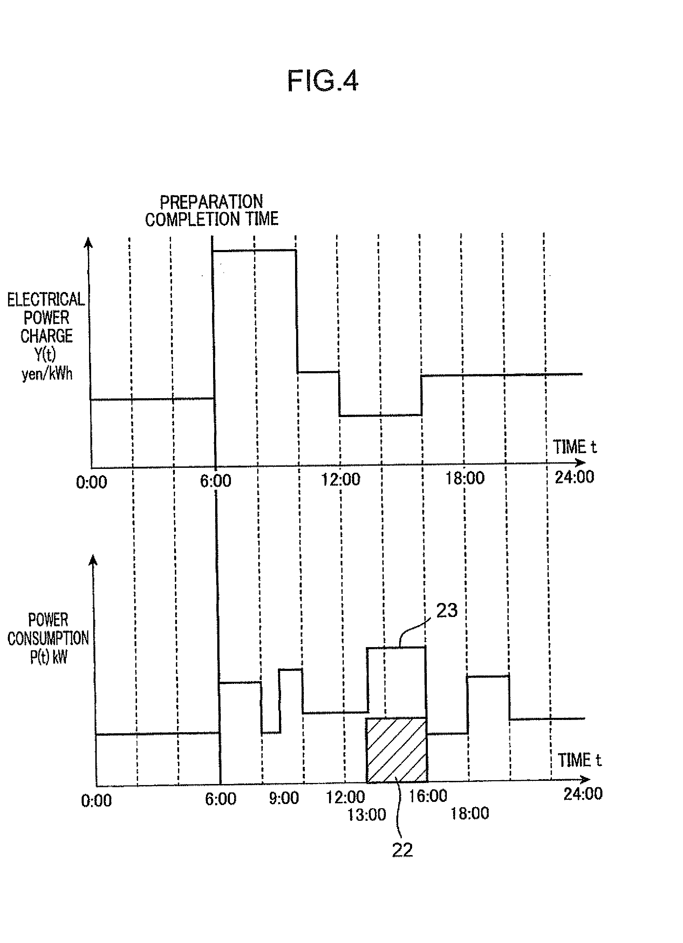

On the assumption that the household electrical appliance 200 was operated during the operation period 21 of 6:00 to 9:00 shown in Fig. 3, the power consumption P(t) will be the value shown with a broken line 20 of Fig. 3. When the operation period of the household electrical appliance 200 is shifted to the operation period 22 of 13:00 to 16:00 as shown in Fig. 4, it can be seen that the power consumption P(t) will become the value shown with a solid line 23 of Fig. 3.

However, the power consumption in the operation period 21 shows the power consumption of only the household electrical appliance 200 when the household electrical appliance 200 is used from 6:00 to 9:00, and the power consumption in the operation period 22 shows the power consumption of only the household electrical appliance 200 when the household electrical appliance 200 is used from 13:00 to 16:00.

Upon comparing the total electricity bills Yt of one day calculated with Formula (1) in the case of operating the household electrical appliance 200 in the operation period 21 of Fig. 3 and operating the household electrical appliance 200 in the operation period 22 of Fig. 4, the total electricity bill Yt of one day can be reduced with the operation period 22 of Fig. 4 since the least expensive time space of the electric power charge Y(t) is being used. The server 100 can minimize the total electricity bill Yt by changing the operation time of the household electrical appliance 200 to the operation period 22 of Fig. 4; that is, by performing a time-shift.

Nevertheless, for example, there are cases where the operation end time of the household electrical appliance 200 desired by the user is 14:00, and the user does not wish the operation to exceed the operation end time. For example, when the household electrical appliance 200 is a washer-dryer and the user uses the cleaned laundry at 14:00, the washing and drying processes need to be completed by 14:00. In the foregoing case, the operation end time will be 16:00 upon valuing the perspective of reducing the electricity bill as shown in Fig. 4, and it will not be possible to satisfy the user's wish.

Thus, the household electrical appliance 200 can resolve the foregoing problem by notifying the server 100 to set a time before 14:00 as the desired operation end time.

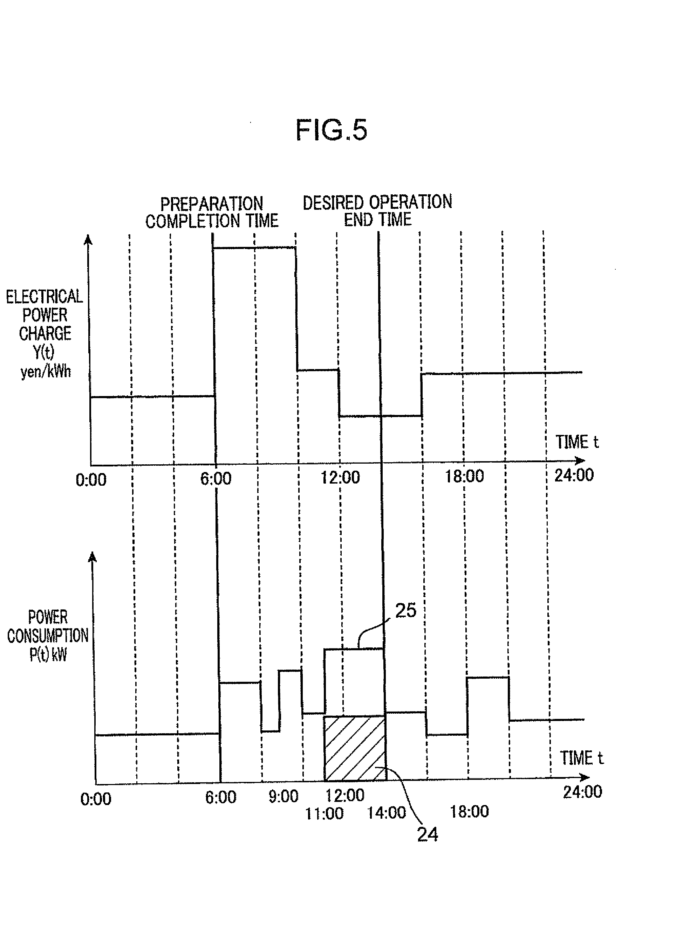

Let it be assumed that, as shown in Fig. 5, the user designated 14:00 as the desired operation end time. Consequently, the server 100 sets the operation period 24 such that the optimal operation start time is 11:00 and the optimal operation end time is 14:00 so that the total electricity bill Yt of one day will be the least expensive up to 14:00 as the desired operation end time. On the assumption that the household electrical appliance 200 was operated in the operation period 24, the household electrical appliance 200 will be subject to the electricity bill shown with the solid line 25 of Fig. 5 for each hour. However, the power consumption P(t) of the operation period 24 shows the power consumption in the case of adding the power consumption of the household electrical appliance 200 to the power consumption P(t) shown with the broken line 20 of Fig. 3, and the power consumption of the time span outside the operation period 24 shall be the same as the power consumption P(t) of the broken line 20.

The method of determining the optimal usage time span explained above; that is, the optimal operation start time and the optimal operation end time, is to solve the minimization problem of creating the usage time span of the household electrical appliance that will result in the smallest total electricity bill under the condition of finishing the operation of the household electrical appliance by the desired operation end time that was input by the user. As a result of executing this method, reduction of the electricity bill can be realized without causing any inconvenience to the user.

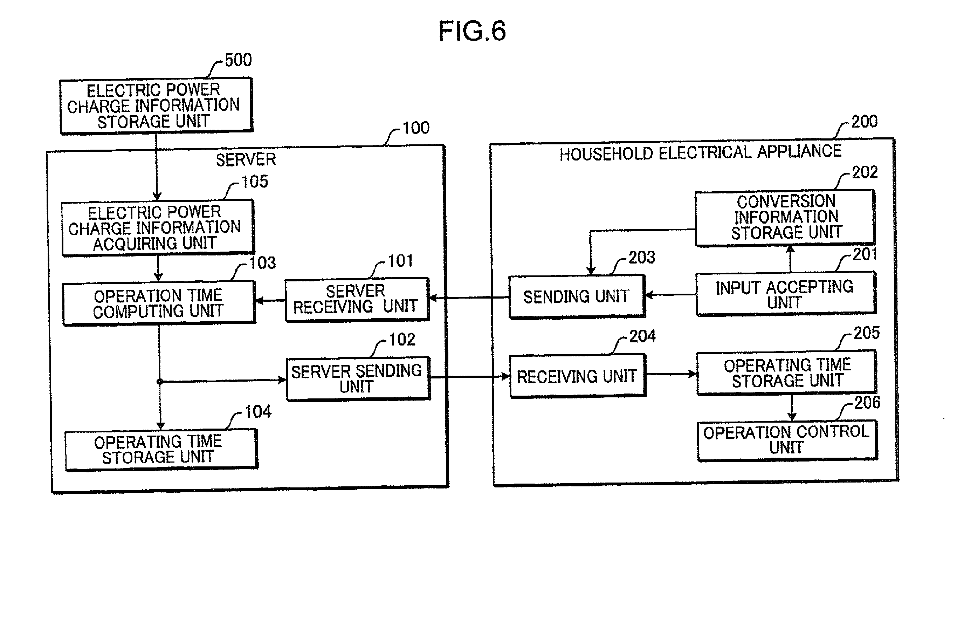

The configuration of the server 100 and the household electrical appliance 200 is now explained. Fig. 6 is a diagram showing the configuration of the server 100 and the household electrical appliance 200 in Embodiment 1 of the present invention. The server 100 comprises, as shown in Fig. 6, a server receiving unit 101, a server sending unit 102, an operation time computing unit 103, an operation time storage unit 104 and an electric power charge information acquiring unit 105.

The server receiving unit 101 receives various types of information sent from the household electrical appliance 200. The server receiving unit 101 receives the desired time information and the electric power information sent by the household electrical appliance 200. The server sending unit 102 sends, to the household electrical appliance 200, the optimal operation start time or the optimal operation end time of the household electrical appliance 200 that was computed by the operation time computing unit 103.

The electric power charge information acquiring unit 105 acquires the electric power charge information showing the electric power charge which changes per hour. The electric power charge information acquiring unit 105 is connected, via wireless or wired connection, to an electric power charge information storage unit 500 of the electric power company which stores, for example, the electric power charge information showing the current and future electric power charge.

The operation time computing unit 103 creates the optimal usage time plan of the household electrical appliance 200 for realizing reduction of the electricity bill based on the electric power charge information from the electric power charge information storage unit 500, the desired time information showing the desired operation end time or the desired operation start time sent from the household electrical appliance 200, the operation period information sent from the household electrical appliance 200 showing the period for which the household electrical appliance 200 needs to be operated, and the electric power information sent from the household electrical appliance 200 showing the electric power required for the household electrical appliance 200 to be operated. In other words, the operation time computing unit 103 computes the operation start time or the operation end time whereby an electricity bill, which is charged when the household electrical appliance 200 is operated up to the desired operation end time, becomes a predetermined charge or less, based on the desired time information and the electric power information received by the server receiving unit 101, and the electric power charge information acquired by the electric power charge information acquiring unit 105. The operation time computing unit 103 outputs the optimal operation start time or the optimal operation end time of the household electrical appliance 200 to the server sending unit 102 and the operation time storage unit 104.

The operation time storage unit 104 stores the optimal operation start time or the optimal operation end time that is obtained for each household electrical appliance by the operation time computing unit 103.

Note that, while the electric power charge information storage unit 500 is installed outside the server 100 in Fig. 6, the electric power charge information storage unit 500 may also be configured inside the server 100. Moreover, the electric power charge information stored in the electric power charge information storage unit 500 is, for example, the electric power charge Y(t) shown in Fig. 3, Fig. 4 and Fig. 5.

Moreover, the server receiving unit 101 and the server sending unit 102 are not limited to receiving and sending information from and to one household electrical appliance, and may also receive and send information from and to a plurality of household electrical appliances (for instance, from and to the household electrical appliance 300 or the household electrical appliance 400).

The configuration of the household electrical appliance 200 is now explained. The household electrical appliance 200 comprises an input accepting unit 201, a conversion information storage unit 202, a sending unit 203, a receiving unit 204, an operation time storage unit 205 and an operation control unit 206.

The input accepting unit 201 is configured, for example, from an input terminal comprising an operation screen or the like. The input accepting unit 201 outputs information that was input by the user to the conversion information storage unit 202 and the sending unit 203. The input accepting unit 201 accepts the input of the desired time information showing the desired operation start time or the desired operation end time of the household electrical appliance.

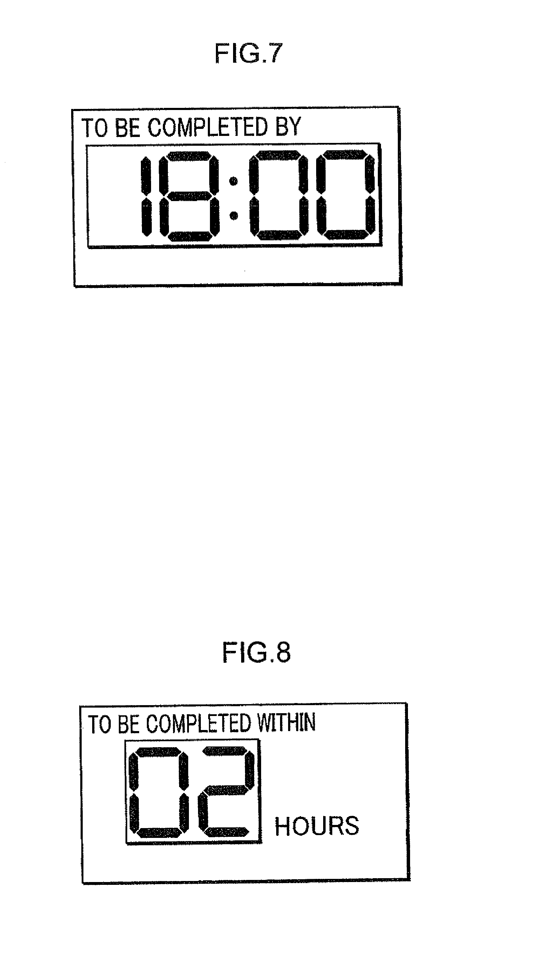

Fig. 7 and Fig. 8 are diagrams showing a display example of the method of inputting the desired operation end time into the input accepting unit 201. Fig. 7 is a diagram showing a display example for explaining the input method in a case where the household electrical appliance 200 is measuring the time and the time that the operation is to be actually finished is known. The user inputs the actual desired operation end time such as, for example, "18:00". This desired operation end time shows that the user wants the operation to be ended by 18:00, and the user inputs the time that he/she wants the operation to finish.

Fig. 8 is a diagram showing a display example for explaining the input method in a case where the household electrical appliance 200 is not measuring the time or the time that the operation is to be actually finished is unclear. The user inputs, for example, "within 02 hours" or the like to indicate within how many hours from the current time the operation should end. This desired operation end time shows that the operation should end within 2 hours, and the user inputs the duration, based on the current time, within which the operation should end.

The input methods shown in Fig. 7 and Fig. 8 are both similar to the input method of a conventional timer setting method, and the input screen is familiar to the user. Thus, the desired operation end time can be set without having to confuse the user.

Moreover, the information to be input by the user using the input accepting unit 201 is the desired operation end time, the operation period information representing the period for which the household electrical appliance 200 needs to be operated, and the electric power information representing the electric power required for the operation. Nevertheless, for example, if the household electrical appliance 200 is a washer-dryer and a wash program (standard program, power saving program, speed-up program or the like) is selected by the input accepting unit 201, the operation period information and the electric power information corresponding to the selected wash program can be specified. Thus, the user is not required to input the operation period information and the electric power information. The point is that the user is not required to input the individual pieces of information if it is possible to specify the desired operation end time, the operation period information and the electric power information based on some kind of input information.

The conversion information storage unit 202 stores conversion information for converting the information input by the input accepting unit 201 into operation period information and electric power information. Here, if the information input by the input accepting unit 201 is operating condition information requiring conversion into time information of the wash program or the like, the conversion information storage unit 202 stores a conversion association table which associates the operating condition information, and the operation period information and the electric power information. The conversion information storage unit 202 stores the electric power information showing the electric power required for the household electrical appliance 200 to be operated, and the operation period information showing the time interval for which the household electrical appliance 200 needs to be operated.

In particular, if the household electrical appliance 200 is a washer-dryer, since a plurality of processes (for instance, washing process, rinsing process, dewatering process, drying process, and so on) are sequentially performed during the operation, the operation period information and the electric power information become complex. The electric power information is represented, for example, as the power consumption P(t) shown in Fig. 3 to Fig. 5, and is linked with the time information. The power consumption P(t) (electric power information) is stored in a plurality for each measurement result of the sensor of a wash program, weight of laundry, ambient temperature and the like. Note that the conversion information storage unit 202 may store, in addition to the power consumption P(t), information related to the total amount of power consumption and the like.

The sending unit 203 sends, to the server receiving unit 101 of the server 100, the desired operation end time input by the input accepting unit 201, and the operation period information and the electric power information stored in the conversion information storage unit 202 corresponding to the operating condition input by the input accepting unit 201,

The receiving unit 204 receives the optimal operation end time or the optimal operation start time sent from the server sending unit 102 of the server 100.

The operation time storage unit 205 stores the optimal operation start time received by the receiving unit 204.

The operation control unit 206 controls the operation of the household electrical appliance 200. The operation control unit 206 starts the operation of the household electrical appliance 200 according to the optimal operation start time or the optimal operation end time sent by the server sending unit 102. The operation control unit 206 outputs a start signal upon reaching the optimal operation start time stored in the operation time storage unit 205, and performs control so as to start the operation of the household electrical appliance 200.

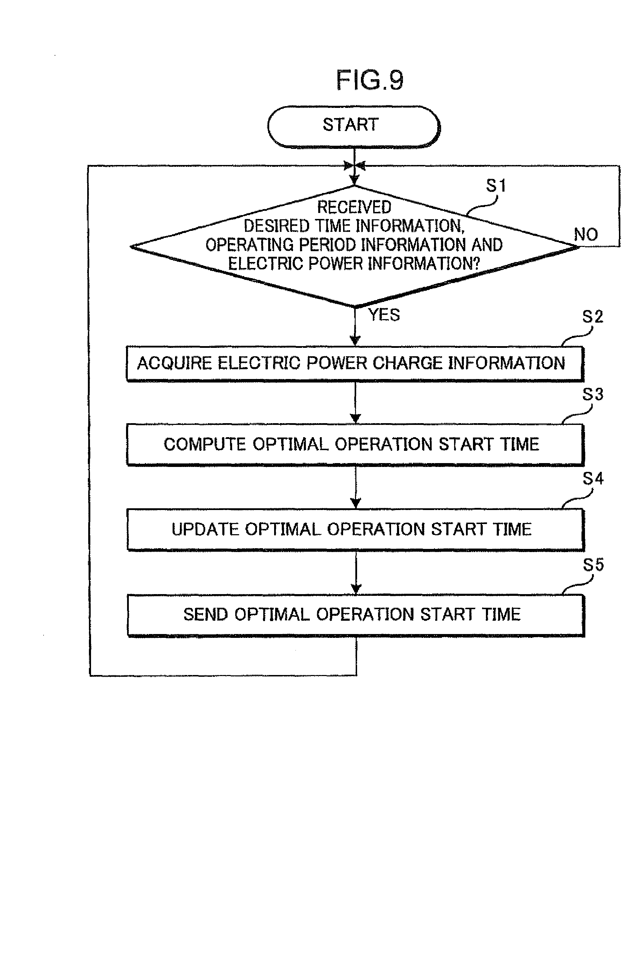

The operation of the server 100 is now explained with reference to the flowchart of Fig. 9. Fig. 9 is a flowchart explaining the operation of the server 100 in Embodiment 1 of the present invention.

After the operation is started, in step S1, the server receiving unit 101 stands by until it receives the desired time information, the operation period information and the electric power information to be sent from the household electrical appliance 200. In other words, the server receiving unit 101 determines whether the desired time information, the operation period information and the electric power information sent by the household electrical appliance 200 have been received. Note that the desired time information, the operation period information and the electric power information are sent not only from the household electrical appliance 200, but also from the household electrical appliance 300 or the household electrical appliance 400, but the explanation thereof is omitted for the sake of convenience. Here, when it is determined that the desired time information, the operation period information and the electric power information have not been received (NO in step S1), the operation enters a standby state, and the determination processing of step S1 T is repeated in a predetermined timing until the desired time information, the operation period information and the electric power information are received.

Meanwhile, when it is determined that the desired time information, the operation period information and the electric power information have been received (YES in step S1), in step S2, the electric power charge information acquiring unit 105 acquires the electric power charge information showing the electric power charge which changes per hour. Note that the electric power charge information acquiring unit 105 accesses the external server operated by the electric power company and acquires the electric power charge information from the electric power charge information storage unit 500 of that external server, but the electric power charge information acquiring unit 105 may also read the electric power charge information that is stored in advance in an internal memory.

Subsequently, in step S3, the operation time computing unit 103 computes the optimal operation start time whereby an electricity bill, which is charged when the household electrical appliance 200 is operated up to the desired operation end time, becomes a predetermined charge or less, based on the desired time information, the operation period information and the electric power information received by the server receiving unit 101, and the electric power charge information acquired by the electric power charge information acquiring unit 105. More specifically, the operation time computing unit 103 computes the optimal operation start time whereby an electricity bill, which is charged when the household electrical appliance 200 is operated up to the desired operation end time, becomes the least expensive based on the desired time information, the operation period information, the electric power information and the electric power charge information. The operation time computing unit 103 outputs the computed optimal operation start time to the server sending unit 102 and the operation time storage unit 104.

The operation time computing unit 103 computes the operation period whereby an electricity bill, which is charged when the household electrical appliance 200 is operated during the period from the current time up to the desired operation end time, becomes the least expensive, based on the desired time information, the operation period information, the electric power information and the electric power charge information (electric power charge Y(t)), and computes the operation start time based on the foregoing operation period. The operation time computing unit 103 can calculate the electricity bill that is charged when the household electrical appliance 200 is operated by integrating the value obtained by multiplying the hourly electric power charge Y(t) by the electric power P(t) required for the household electrical appliance 200 to be operated, by the operation period from the operation start time to the operation end time within the period from the current time to the desired operation end time.

Subsequently, in step S4, the operation time computing unit 103 updates the optimal operation start time that was previously computed and stored in the operation time storage unit 104 to the newly computed optimal operation start time.

Subsequently, in step S5, the server sending unit 102 sends, to the household electrical appliance 200, the optimal operation start time that was computed by the operation time computing unit 103.

Note that, in step S3, the operation time computing unit 103 may also determine the optimal operation start time so that the total electricity bill Yt of one day shown in Formula (1) above becomes minimum by using the desired time information, the operation period information and the electric power information sent from the household electrical appliance 200, the electric power charge information Y(t) acquired by the electric power charge information acquiring unit 105, and the optimal operation start time of the other household electrical appliances 300, 400 that was previously stored in the operation time storage unit 104.

Moreover, depending on the computation result of step S3, there may be cases where the optimal operation start time of the other household electrical appliances 300, 400 needs to be changed in order to minimize the total electricity bill Yt of one day. In the foregoing case, in step S5, the server sending unit 102 also sends the updated optimal operation start time to the other household electrical appliances subject to change other than the household electrical appliance 200.

As a result of operating the operation time computing unit 103 according to the flowchart of Fig. 9, the usage time span of the respective household electrical appliances is determined so as to ensure the comfort of the household electrical appliance network system and realize reduction of the electricity bill. In the flowchart of Fig. 9, the operation time computing unit 103 can obtain the optimal operation end time or the optimal operation start time in cases where the electric power charge changes by performing computation using the electric power charge information from the electric power charge information storage unit 500.

The processing operation of the household electrical appliance 200 is now explained. As the processing operation of the household electrical appliance 200, there are the following processing operations; namely, (1) the processing operation after receiving the optimal operation start time, and (2) the processing operation up until the desired time information, the operation period information and the electric power information are sent, and the respective processing operations are explained below.

Foremost, in relation to (1) above, when the receiving unit 204 receives the optimal operation start time sent from the server 100, the received optimal operation start time is stored in the operation time storage unit 205. Subsequently, when the current time becomes the optimal operation start time stored in the operation time storage unit 205, the operation control unit 206 starts the operation of the household electrical appliance 200.

Subsequently, in relation to (2) above, when the input accepting unit 201 accepts an input of the desired time information and the operating condition by the user, the input accepting unit 201 specifies the operation period information and the electric power information corresponding to the operating condition based on the conversion information stored in the conversion information storage unit 202. The sending unit 203 sends the desired time information, the operation period information and the electric power information to the server 100.

The user's input of the desired time information and the operating condition using the input accepting unit 201 is not limited to before the start of operation. In order for the user to change the operation program (operating condition) or the operation end time during the operation, in certain cases the input accepting unit 201 also accepts the input of the desired time information and the operating condition during the operation of the household electrical appliance 200. Accordingly, when the user's input using the input accepting unit 201 is confirmed, the sending unit 203 promptly sends the desired time information, the operation period information and the electric power information to the server receiving unit 101. In other words, the sending unit 203 sends the desired time information and the electric power information to the server when input of the desired time information is accepted by the input accepting unit 201 even if it is during the operation control by the operation control unit 206. The determination of the optimal usage time span of the respective household electrical appliances can thereby be performed promptly by the operation time computing unit 103, and it is possible to further ensure the user's comfort and realize reduction of the electricity bill.

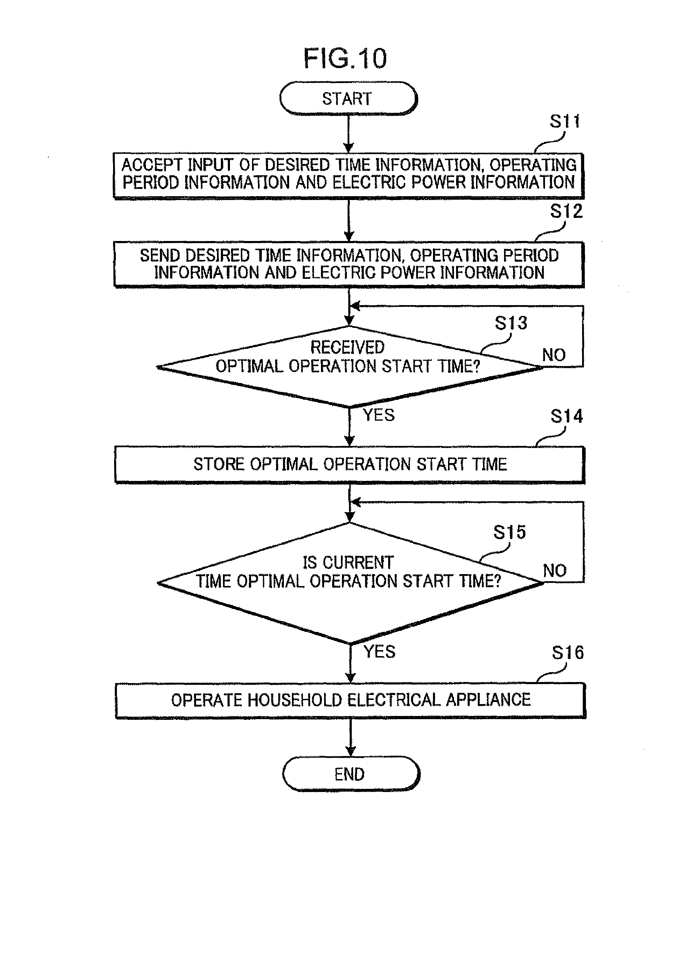

The operation of the household electrical appliance 200 in Embodiment 1 of the present invention is now explained with reference to the flowchart of Fig. 10. Fig. 10 is a flowchart explaining the operation of the household electrical appliance 200 in Embodiment 1 of the present invention.

Foremost, in step S11, the input accepting unit 201 of the household electrical appliance 200 accepts, from the user, the input of the desired time information showing the desired operation end time of the household electrical appliance 200, the operation period information showing the period for which the household electrical appliance 200 needs to be operated, and the electric power information showing the electric power required for the household electrical appliance 200 to be operated. The desired operation end time represents the operation end time of the household electrical appliance 200 desired by the user. For example, the user inputs the desired operation end time of the household electrical appliance 200. The input accepting unit 201 outputs the actual desired operation end time to the sending unit 203. When the number of hours from the current time at which the operation should end is input, the input accepting unit 201 calculates the actual desired operation end time and outputs the desired operation end time to the sending unit 203.

Moreover, the information to be input by the user by using the input accepting unit 201 is the desired operation end time, the operation period information and the electric power information. Nevertheless, when the input accepting unit 201 accepts an input of the operating condition from the user and can specify the desired operation end time, the operation period information and the electric power information based on the accepted operating condition, the user is not required to input the desired operation end time, the operation period information and the electric power information.

Moreover, when the input information is information requiring conversion from the operating condition of a wash program or the like, the input accepting unit 201 reads the operation period information and the electric power information associated with the operating condition from the conversion association table of the conversion information storage unit 202.

Subsequently, in step S12, the sending unit 203 sends the desired time information, the operation period information and the electric power information to the server 100.

Subsequently, in step S13, the receiving unit 204 determines whether the optimal operation start time sent by the server 100 has been received. Here, when it is determined that the optimal operation start time has not been received (NO in step S13), the operation enters a standby state, and the determination processing of step S 13 is repeated in a predetermined timing until the optimal operation start time is received.

Meanwhile, when it is determined that the optimal operation start time has been received (YES in step S13), in step S14, the operation time storage unit 205 stores the optimal operation start time that was received by the receiving unit 204.

Subsequently, in step S15, the operation control unit 206 determines whether the current time has become the optimal operation start time stored in the operation time storage unit 205. When it is determined that the current time is not yet the optimal operation start time stored in the operation time storage unit 205 (NO in step S 15), the operation enters a standby state, and the determination processing of step S15 is repeated in a predetermined timing until the current time becomes the optimal operation start time stored in the operation time storage unit 205.

Meanwhile, when it is determined that the current time has become the operation start time stored in the operation time storage unit 205 (YES in step S15), in step S16, the operation control unit 206 starts the operation of the household electrical appliance 200. Note that, when the operating condition is input by the input accepting unit 201, the operation control unit 206 operates the household electrical appliance 200 according to that operating condition.

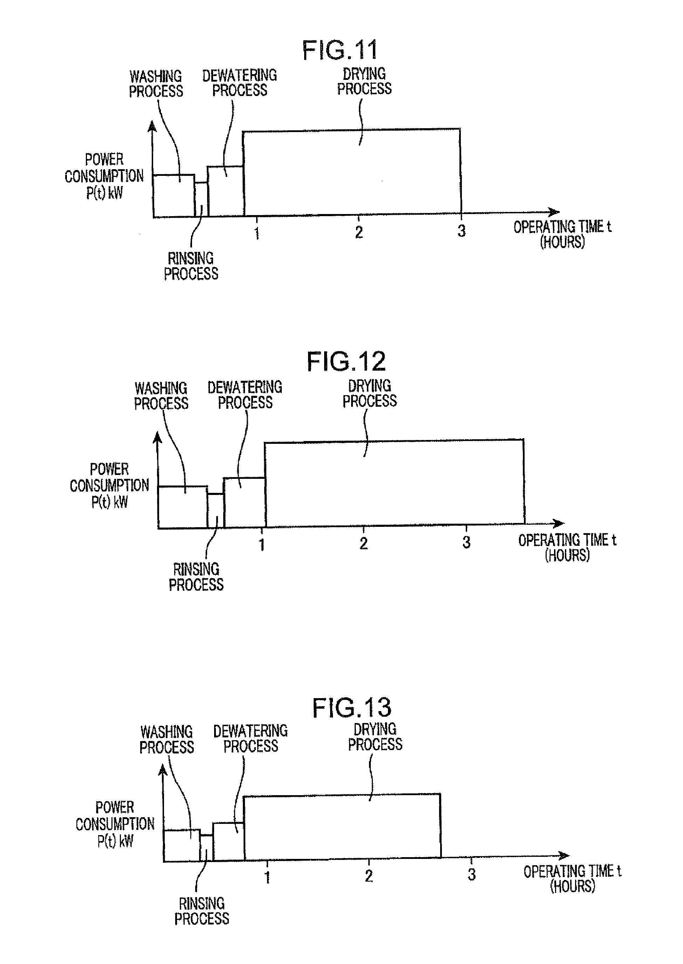

The electric power information sent by the household electrical appliance 200 to the server 100 is now explained in detail. When the household electrical appliance 200 is a washer-dryer, for example, the power consumption P(t) is stored in a plurality for each measurement result of the sensor of a wash program, weight of laundry, ambient temperature and the like as shown in Fig. 11 to Fig. 13.

Fig. 11 to Fig. 13 show the power consumption P(t) when the household electrical appliance 200 is a washer-dryer, order of washing process, rinsing process, dewatering process and drying process as the processes of the washer-dryer, operating time required in the respective processes, and electric power that is consumed in the respective processes. Fig. 11 is a diagram showing the change in the power consumption when the wash program is a standard program and the weight of the clothes to be washed is 3 kg, Fig. 12 is a diagram showing the change in the power consumption when the wash program is a standard program and the weight of the clothes to be washed is 5 kg, and Fig. 13 is a diagram showing the change in the power consumption when the wash program is a cleaning program and the weight of the clothes to be washed is 3 kg. In Fig. 11 to Fig. 13, the horizontal axis shows the operating time t with the start time at 0, and the vertical axis shows the power consumption P(t).

As shown in Fig. 11, the power consumption P(t) is not constant, and the power consumption P(t) is largest during the drying process. Thus, it can be understood that the method of operating the drying process of the washer-dryer during the time span that the electric power charge Y(t) is least expensive is valid as the method of reducing the electricity bill. Moreover, as shown in Fig. 12 and Fig. 13, in the case of a washer-dryer, the change in the power consumption relative to the operating time will differ depending on various parameters such as the weight of the clothes to be washed, and the selected wash program such as the standard program, the thorough washing program, the cleaning program or the like.

Accordingly, the power consumption P(t) will change depending on the measurement result of the sensor of the wash program, the weight of the clothes to be washed, the ambient temperature, and so on. Thus, the operation time computing unit 103 determines the usage time span of the respective household electrical appliances so that the total electrical bill Yt computed with Formula (1) will be minimal based on the conditions of the household electrical appliance. Here, more the information of the power consumption P(t) configuring Formula (1), the operation time computing unit 103 can compute the optimal operation start time capable of further reducing the electricity bill. Thus, the household electrical appliance 200 sends the electric power change of the washer-dryer, in which one example thereof is shown in Fig. 11 and Fig. 12, to the operation time computing unit 103 as the electric power information. The operation time computing unit 103 is thereby able to determine the usage time span of the respective household electrical appliance capable of further reducing the electricity bill.

As described above, the following effects are achieved according to this Embodiment.

(1) Since the desired time information, the operation period information and the electric power information are sent from the household electrical appliance to the server, and the server computes the optimal operation start time on a case-by-case basis and sends the computed optimal operation start time to the household electrical appliance, it is possible to create a usage time span plan of the household electrical appliance corresponding to the change of the desired time information, the operation period or the electric power information by the household electrical appliance.

(2) Since information concerning the operation of the household electrical appliance (conversion information for converting operating condition into operation period information and electric power information) is retained by the household electrical appliance and necessary information is sent to the server, there is no need to store information concerning the operation of the household electrical appliance in the server, and, for instance, even when a new household electrical appliance is installed inside the home, it is possible to flexible deal with such installation.

(3) Since the desired operation end time can be input using the household electrical appliance which can be used for inputting operating conditions such as menu selection, there is no need to perform operation at two locations; namely, the location where the server is located and the location where the household electrical appliance is located, and it is thereby possible to improve the user-friendliness of the user.

(4) Since the electric power information showing the time of the electric power is notified from the household electrical appliance to the server, it is possible to create a usage time span plan of the household electrical appliance capable of realizing further equalization of the electric power load and reduction of the electricity bill.

(5) Since the operating condition or the desired operation end time is changed by the household electrical appliance and the changed information is immediately sent to the server at the point in time that the change of the operating condition or the desired operation end time is confirmed, the server-side can create a usage time span plan of the household electrical appliance based on real-time electric power information, and it is thereby possible to create a usage time span plan of the household electrical appliance capable of realizing further equalization of the electric power load and reduction of the electricity bill.

(Embodiment 2)

Embodiment 2 of the present invention is now explained. In the ensuing explanation, the differences in comparison to the configuration and operation of Embodiment 1 are mainly described, and explanation of the configuration and operation which are the same as the configuration and operation of Embodiment 1 will be omitted.

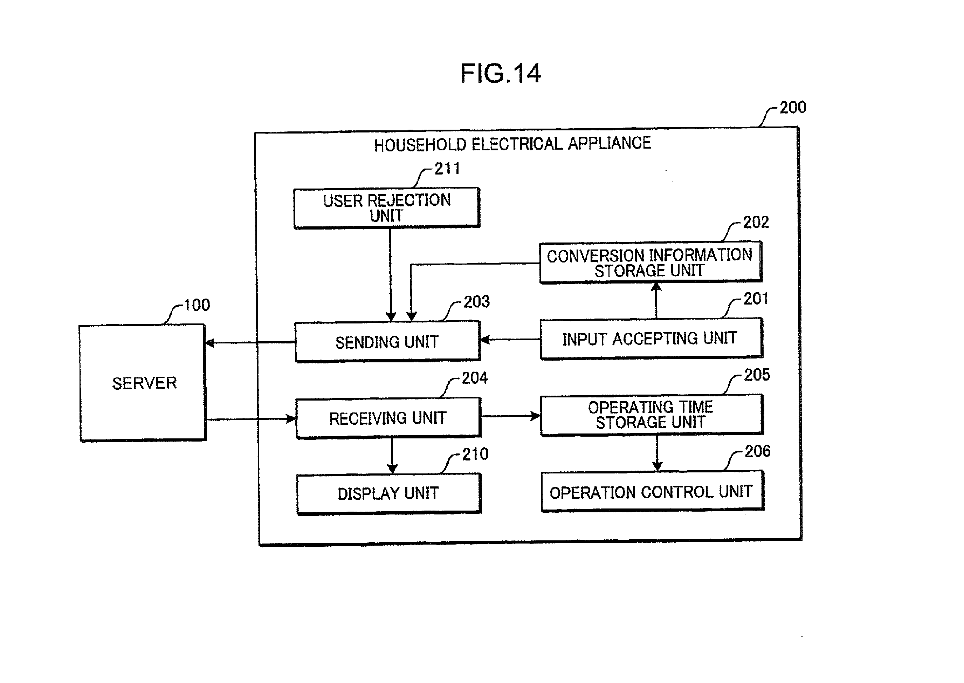

The configuration of Embodiment 2 of the present invention is now explained with reference to Fig. 14. Fig. 14 is a diagram showing the configuration of the household electrical appliance in Embodiment 2 of the present invention. The household electrical appliance 200 shown in Fig. 14 comprises an input accepting unit 201, a conversion information storage unit 202, a sending unit 203, a receiving unit 204, an operation time storage unit 205, an operation control unit 206, a display unit 210 and a user rejection accepting unit 211. The configuration in Fig. 14 that is different from Fig. 6 is the display unit 210 and the user rejection accepting unit 211.

The display unit 210 is configured, for example, from a display panel, and displays information sent from the server 100; that is, displays the optimal operation start time.

The user rejection accepting unit 211 is configured, for example, from a push button, and accepts whether to reject the optimal operation start time received by the receiving unit 204. The user rejection accepting unit 211 outputs, to the sending unit 203, a rejection signal representing that the optimal operation start time received by the receiving unit 204 has been rejected by the user. When the contents (optimal operation start time) displayed on the display unit 210 are not preferred contents, the user makes an input via the user rejection accepting unit 211 for rejecting the optimal operation start time. Subsequently, upon accepting the foregoing input from the user, the user rejection accepting unit 211 outputs a rejection signal. Note that the rejection signal corresponds to an example of the re-computation request. When the sending unit 203 detects the rejection signal, the sending unit 203 sends the rejection signal to the server 100. In other words, when the optimal operation start time is rejected by the user rejection accepting unit 211, the sending unit 203 sends a rejection signal (re-computation request) for requesting the server 100 to re-compute the optimal operation start time. It is thereby possible to notify the server 100 that the user is dissatisfied with the optimal operation start time.

The server receiving unit 101 receives the rejection signal sent by the sending unit 203. When the rejection signal is received by the server receiving unit 101, the operation time computing unit 103 re-computes the optimal operation start time of the household electrical appliance 200.

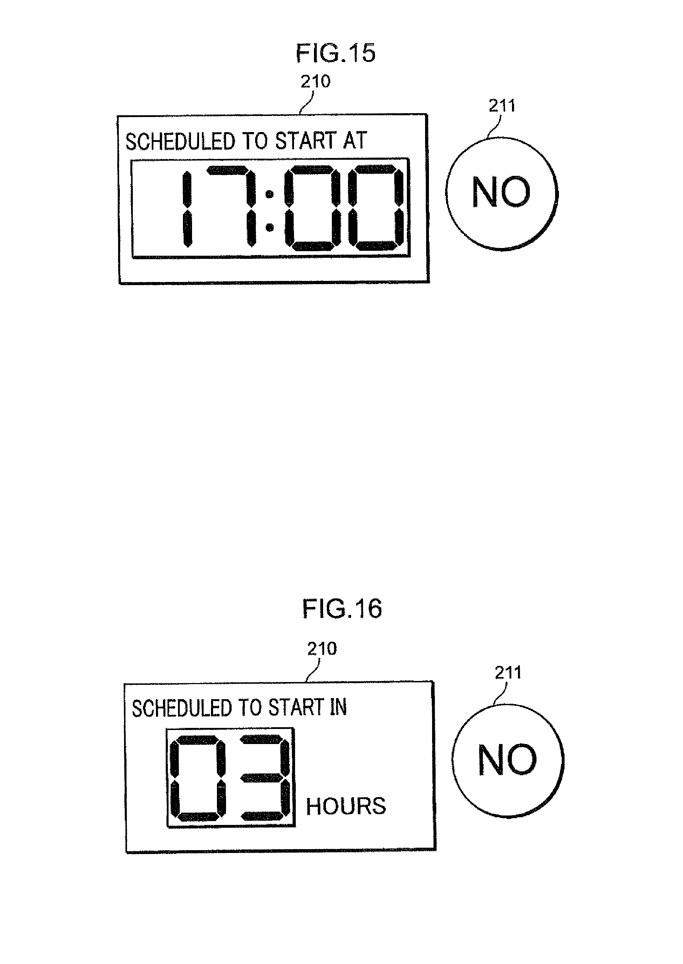

The display modes of the display unit 210 is now explained with reference to Fig. 15 and Fig. 16. Fig. 15 is a diagram showing a display example displaying the optimal operation start time on the display unit 210 in Embodiment 2 of the present invention, and Fig. 16 is a diagram showing a display example displaying the time up to the optimal operation start time on the display unit 210 in Embodiment 2 of the present invention.

The user rejection accepting unit 211 is disposed near the display unit 210. The display unit 210 displays the optimal operation start time received by the receiving unit 204. Subsequently, when the time or hours displayed on the display unit 210 are undesirable, the user presses the user rejection accepting unit 211, which is push button, disposed next to the display unit 210. Consequently, when the time or hours displayed on the display unit 210 are undesirable, for instance, if the household electrical appliance 200 is a washer-dryer and the user wishes for the operation of the washer-dryer to start sooner so that the user will have sufficient time to iron the clothes, the user can notify his/her intention of rejecting the optimal operation start time to the server 100.

Accordingly, as a result of the household electrical appliance 200 comprising the display unit 210 and the user rejection accepting unit 211, the user can, for example, make preparations for ironing clothes according to the operation start time of the washer-dryer or place dishes in the dishwasher according to the operating start time of the dishwasher, and the overall household chores using household electrical appliances can be performed efficiently. Moreover, since the user can make preparations relative to the operation of the household electrical appliance according to the displayed optimal operation start time and operate the household electrical appliance more reliably, it is possible to realize highly effective equalization of the electric power load and reduction of the electricity bill.

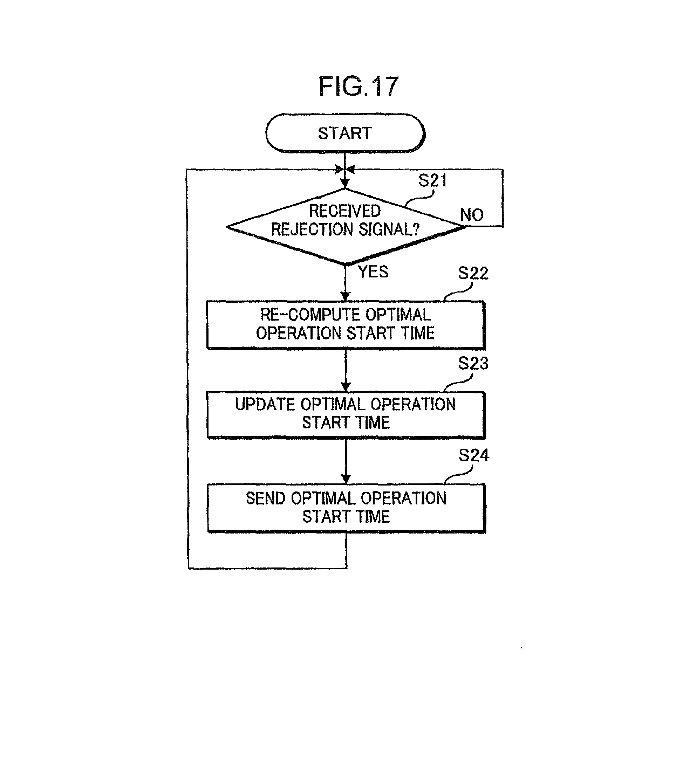

The processing of the server 100 when the rejection signal is output by the user rejection accepting unit 211 is now explained with reference to Fig. 17. Fig. 17 is a flowchart showing the operation of the server in Embodiment 2 of the present invention. Note that the processing shown in Fig. 17 is processed in parallel with the processing of Fig. 9.

After the operation is started, in step S21, the operation time computing unit 103 stands by until it receives the rejection signal from the household electrical appliance 200. In other words, the server receiving unit 101 determines whether the rejection signal sent by the household electrical appliance 200 has been received. Here, when it is determined that the rejection signal has not been received (NO in step S21), the operation enters a standby state, and the determination processing of step S21 is repeated in a predetermined timing until the rejection signal is received.

When it is determined that the rejection signal has been received (YES in step S21), in step S22, the operation time computing unit 103 re-computes the optimal operation start time that was computed in step S3 of the flowchart shown in Fig. 9 when the operation of the household electrical appliance 200 was started, and computes the new optimal operation start time.

In step S23, when the new optimal operation start time is computed in step S22, the operation time computing unit 103 updates the optimal operation start time that was previously computed and stored in the operation time storage unit 104 to the newly computed optimal operation start time.

Subsequently, in step S24, the server sending unit 102 sends, to the household electrical appliance 200, the optimal operation start time that was re-computed by the operation time computing unit 103.

In the re-computation processing of step S22, the operation time computing unit 103 re-computes, as the new optimal operation start time, for example, a time that is one hour earlier or a time that is one hour later than the optimal operation start time that was computed when the operation of the household electrical appliance 200 was started.

Whether to set a time that is one hour earlier or a time that is one hour later than the optimal operation start time that was computed when the operation was started can be set, for example, by the user in advance. Moreover, the operation time computing unit 103 may also determine the method based on the type of household electrical appliance 200 (for example, washer-dryer, iron, rice cooker or the like).

Moreover, the operation time computing unit 103 may compute the optimal operation start time that will result in the least expensive electricity bill upon excluding the previously computed optimal operation start time.

Moreover, in step S22, there may be cases where the optimal operation start time of the other household electrical appliances 300, 400 needs to be changed in order to minimize the total electricity bill Yt of one day. In the foregoing case, in step S24, the server sending unit 102 also sends the updated optimal operation start time to the other household electrical appliances subject to change other than the household electrical appliance 200.

As described above, as a result of the operation time computing unit 103 operating the server 100 according to the flowchart shown in Fig. 17, it is possible to determine the usage time span of the respective household electrical appliances capable of ensuring the comfort of the household electrical appliance network system and realizing reduction of the electricity bill.

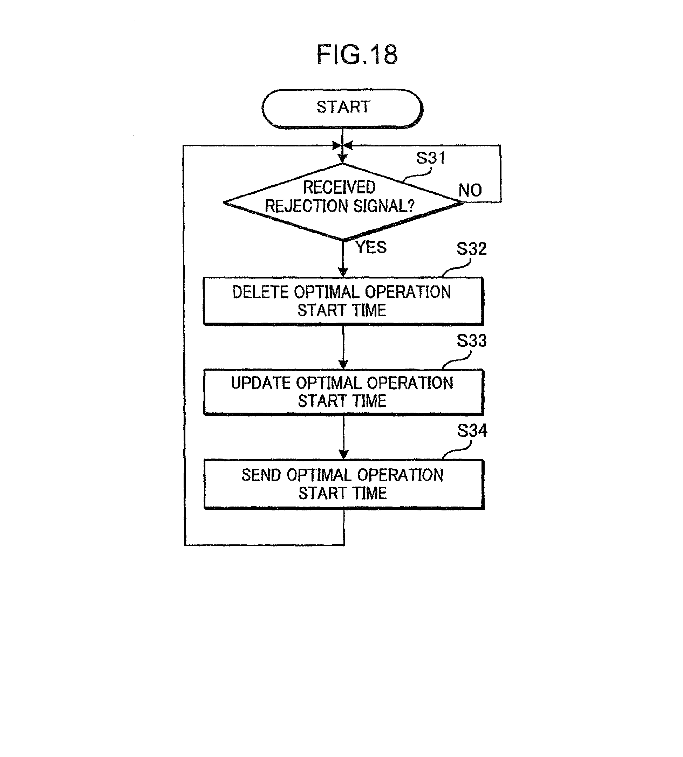

Note that, rather than performing the processing shown in Fig. 17, the server 100 may also perform the processing shown in Fig. 18. Fig. 18 is a flowchart showing the operation of the server in a modified example of Embodiment 2 of the present invention.

After the operation is started, in step S31, the operation time computing unit 103 stands by until it receives the rejection signal from the household electrical appliance 200. In other words, the server receiving unit 101 determines whether the rejection signal sent by the household electrical appliance 200 has been received. Here, when it is determined that the rejection signal has not been received (NO in step S31), the operation enters a standby state, and the determination processing of step S31 is repeated in a predetermined timing until the rejection signal is received.

When it is determined that the rejection signal has been received (YES in step S31), in step S32, the operation time computing unit 103 deletes, from the operation time storage unit 104, the optimal operation start time that was computed in step S3 of the flowchart shown in Fig. 9 when the operation of the household electrical appliance 200 was started.

In step S33, after the previously computed optimal operation start time is deleted in step S32, the operation time computing unit 103 updates the previously computed optimal operation start time of the household electrical appliances other than the household electrical appliance 200 that is stored in the operation time storage unit 104.

Subsequently, in step S34, the server sending unit 102 sends, to the household electrical appliance 200, a signal showing that the previous computed optimal operation start time has been deleted, and sends the new optimal operation start time to the household electrical appliances other than the household electrical appliance 200.

Note that, in the modified example of Embodiment 2, when the optimal operation start time or the optimal operation end time is rejected by the user rejection accepting unit 211, the operation control unit 206 starts the operation of the household electrical appliance 200 irrespective of the optimal operation start time or the optimal operation end time from the server 100.

Note that, while the display unit 210 displays the optimal operation start time in Embodiment 2, the present invention is not particularly limited thereto, and the operation control unit 206 may also compute the optimal operation end time from the optimal operation start time received from the server 100 by using the operation period information required for the household electrical appliance 200 to be operated, and display the computed optimal operation end time on the display unit 210.

(Embodiment 3)

The configuration of the household electrical appliance network system in Embodiment 3 of the present invention is the same as the configuration of the household electrical appliance network system shown in Fig. 1. The household electrical appliance network system in Embodiment 3 comprises a server 100, and a plurality of household electrical appliances 200, 300, 400. The server 100 and the plurality of household electrical appliances 200, 300, 400 mutually connected communicably via a wireless network or a wired network.

In Embodiment 3, the server 100 and the plurality of household electrical appliances 200, 300, 400 are explained as equipment to be installed inside the user's home, but the server 100 may be installed outside. Moreover, the processing to be performed by the server 100 as explained below may be performed by the household electrical appliance inside the home, and the household electrical appliance inside the home may include the function of the server 100.

Moreover, while the configuration and operation of the household electrical appliance 200 are described in the ensuing explanation, the foregoing configuration and operation may also be similarly applied to the household electrical appliance 300 and the household electrical appliance 400, and the explanation thereof is omitted.

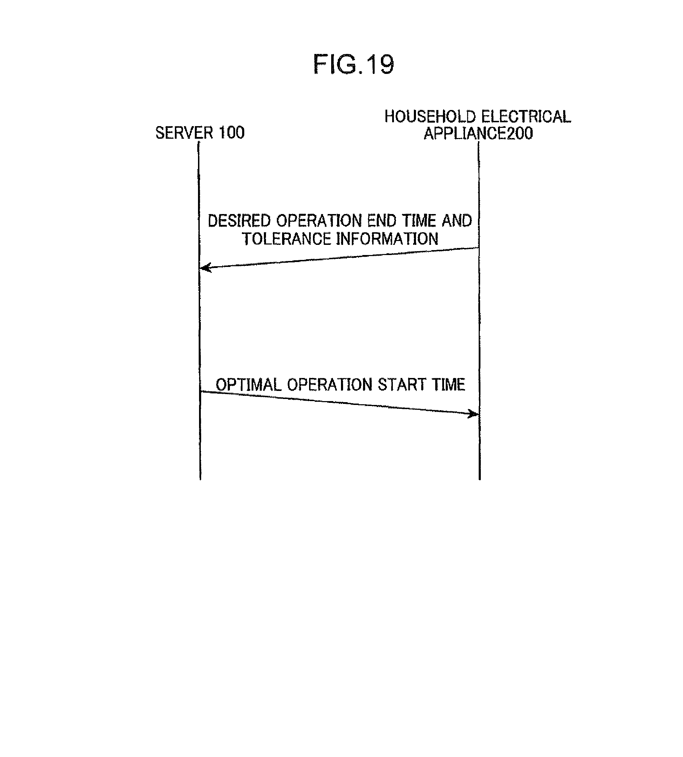

Fig. 19 is a diagram showing the signals that are communicated between the server 100 and the household electrical appliance 200 in Embodiment 3 of the present invention. As shown in Fig. 19, the household electrical appliance 200 sends a desired operation end time and tolerance information to the server 100. Note that the tolerance information corresponds to an example of the tolerance level information. Subsequently, the server 100 that received the desired operation end time and the tolerance information computes an optimal operation start time of the household electrical appliance 200 in consideration of the desired operation end time and the tolerance information, and sends the optimal operation start time to the household electrical appliance 200. Subsequently, the household electrical appliance 200 starts the operation according to the optimal operation start time sent from the server 100.

While only the desired operation end time was sent from the household electrical appliance 200 to the server 100 in Embodiments 1 and 2, the desired operation end time and the tolerance level information are sent from the household electrical appliance 200 to the server 100 in Embodiment 3.

Note that, while the household electrical appliance 200 sends the desired operation end time, which is desired by the user, to the server 100 in the ensuing explanation, the present invention is not limited thereto. The desired operation end time and the desired operation start time may be mutually converted easily based on the operation period information representing the operation period for which the household electrical appliance 200 needs to be operated. Thus, the household electrical appliance 200 may also send, in substitute for the desired operation end time, the desired operation start time, which is desired by the user, to the server 100. Moreover, upon sending the desired operation end time and the tolerance information, the household electrical appliance 200 may also send, together with the desired operation end time and the tolerance time, operation period information representing the operation period for which the household electrical appliance 200 needs to be operated, and electric power information representing the electric power required for the household electrical appliance 200 to be operated.

Moreover, while the server 100 sends the optimal operation start time to the household electrical appliance 200 in the ensuing explanation, the present invention is not limited thereto. The optimal operation end time and the optimal operation start time may be mutually converted easily based on the operation period information representing the operation period for which the household electrical appliance 200 needs to be operated. Thus, the server 100 may send the optimal operation end time to the household electrical appliance 200 in substitute for the optimal operation start time.

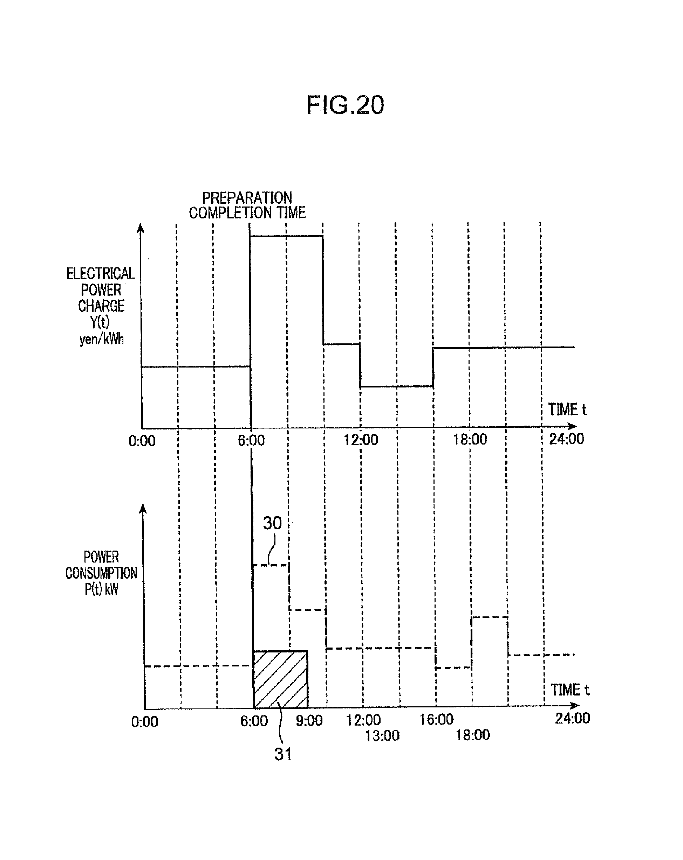

The processing performed by the server 100 for determining the optimal operation start time of the household electrical appliance 200 is now explained with reference to Fig. 20 to Fig. 22.

Fig. 20 to Fig. 22 are diagrams explaining the processing performed by the server 100 for determining the optimal operation start time of the household electrical appliance 200 in Embodiment 3 of the present invention. The upper diagrams of Fig. 20, Fig. 21 and Fig. 22 are diagrams showing the time change of the electric power charge Y(t) of one day. Moreover, the lower diagrams of Fig. 20, Fig. 21 and Fig. 22 are diagrams showing the change of the power consumption P(t) of one day. The horizontal axis of the upper diagrams of Fig. 20, Fig. 21 and Fig. 22 represent the time t, and the vertical axis represents the electric power charge Y(t) yen/kWh. Moreover, the horizontal axis of the lower diagrams of Fig. 20, Fig. 21 and Fig. 22 represent the time t, and the vertical axis represents the power consumption P(t)kW of the entire home, or the plurality of household electrical appliances connected to the server 100. Moreover, in Fig. 20 to Fig. 22, let it be assumed that the operation period showing the operating time of the household electrical appliance 200 is 3 hours.

As shown in the upper diagrams of Fig. 20 to Fig. 22, the electric power charge Y(t) changes depending on the time. If an electric power supply source such as solar cells or fuel cells is installed, or if storage cells are installed in the home where the household electrical appliance is installed, the domestic electricity supply system will considerably change. Thus, the electric power charge Y(t) shown in the upper diagrams of Fig. 20, Fig. 21 and Fig. 22 reflects the real-time pricing in which the electric power charge changes in real-time.

Real-time pricing generally shows the electric power charge Y(t) that is notified from the electric power company in advance. Moreover, in addition to the electric power charge notified by the electric power company, in certain cases the electric power charge Y(t) also shows the electric power charge Y(t) that is prepared based on the past performance of device operation information for operating the domestic power-generating equipment, batteries and the like, power purchase price information, and power selling price information.

In order to realize the effects of the present invention, in addition to the electric power charge notified by the electric power company, the electric power charge Y(t) may also be the electric power charge information, which accommodates only a certain household, prepared based on the past performance of device operation information, power purchase price information, power selling price information, and so on. What is important is that the electric power charge Y(t) which depends on the time t shown in Fig. 20, Fig. 21 and Fig. 22 can be affirmed, and any method may be used for acquiring information of the electric power charge Y(t).

If the solar cells installed in the home are of a small scale, the excess electricity needs to be purchased with a system from the electric power company. Thus, the change in the electric power charge Y(t) may depend on the power consumption P(t). Nevertheless, for the sake of convenience in the ensuing explanation, let it be assumed that the change in the electric power charge Y(t) is not dependent on the power consumption P(t).

In Fig. 20, the total electricity bill Yt of one day can be obtained with Formula (2) below.

[Mathematical Formula 2]

$$Yt = \int_{t=0:00}^{24:00} (Y(t) \times P(t))dt \qquad \cdots (2)$$

However, the integral range in Formula (2) above shall be from 0:00 to 24:00, and the sum range shall be the number of domestic household electrical appliances that are connected to the server 100.

Based on Formula (2) above, in order to reduce the total electricity bill Yt of one day, it can be seen that the best method is to use the household electrical appliance when the electric power charge Y(t) is cheaper, in addition to reducing the power consumption P(t).

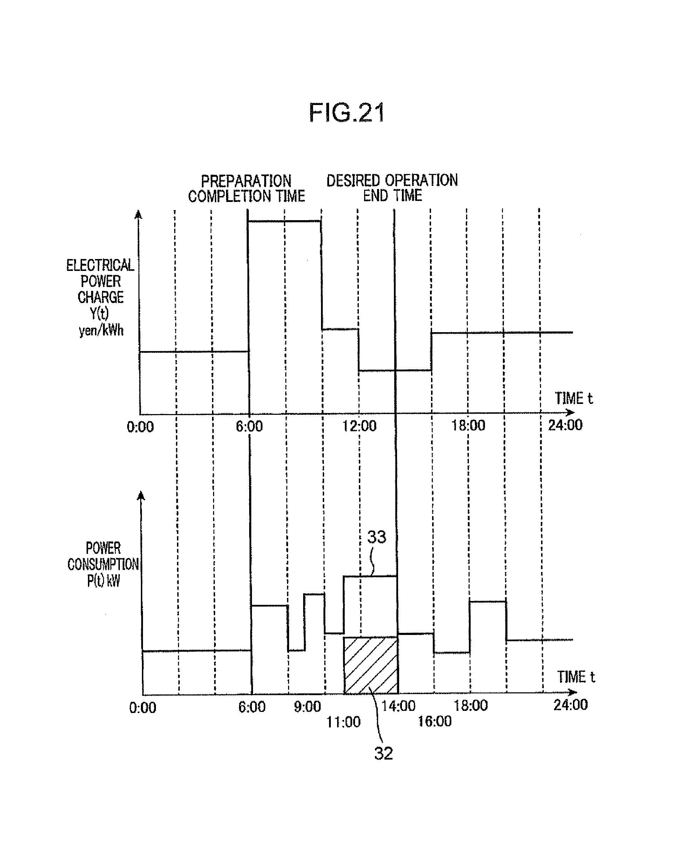

On the assumption that the household electrical appliance 200 was operated during the operation period 31 of 6:00 to 9:00 shown in Fig. 20, the household electrical appliance will be subject to the electricity bill shown with a broken line 30 of Fig. 20 every hour. Meanwhile, when the user has set 14:00 as the desired operation end time as shown in Fig. 21, the server 100 determines the optimal operation start time to be 11:00 and determines the operation end time to be 14:00, and the household electrical appliance will be subject to the electricity bill shown with a solid line 33 of Fig. 21 every hour.

As shown in Fig. 21, when the household electrical appliance is operated with the operation start time as 11:00 and the operation end time as 14:00, it can be seen that the total electricity bill Yt of one day calculated with Formula (2) will be cheaper in comparison to the case shown in Fig. 20. Nevertheless, when the operation start time is 12:00 and the operation end time is 15:00, the electricity bill can be further reduced in comparison to the case shown in Fig. 21.

Here, the tolerance information in Embodiment 3 refers to the information showing to what extent the actual operation end time can be extended or shortened relative to the desired operation end time. For example, if the tolerance information is 1 hour, the time in which one hour has elapsed from the desired operation end time can be used as the operation end time. The server 100 computes the optimal operation start time resulting in the least expensive electricity bill based on the tolerance information.

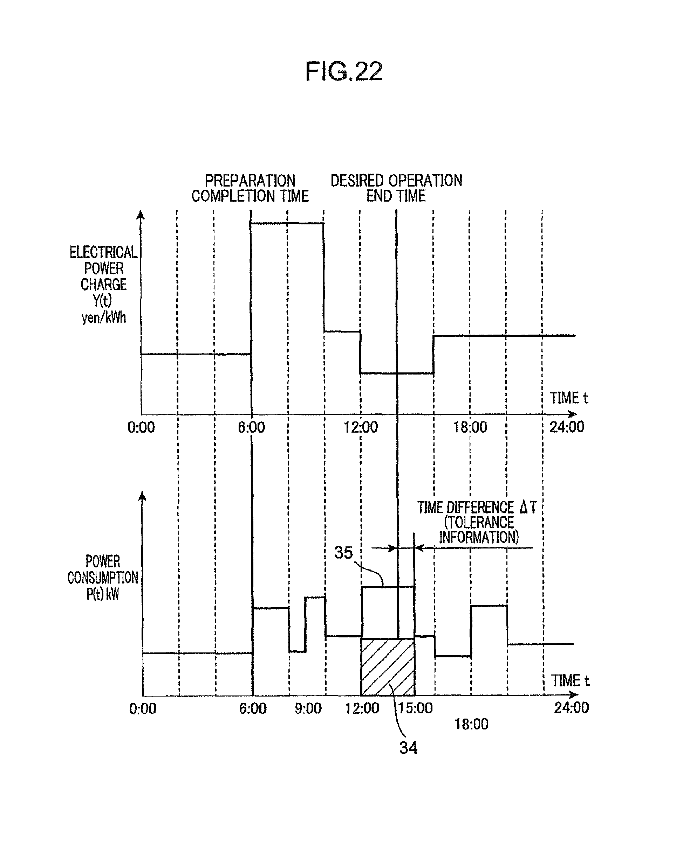

Accordingly, when the user sets the desired operation end time to 14:00 and further sets the tolerance information to one hour before and one hour after the desired operation end time, the server 100 sets, as shown in Fig. 22, the optimal operation start time to 12:00 and the optimal operation end time to 15:00 based on the tolerance information. In addition, since the household electrical appliance is operated during the operation period 24, the required electricity bill will be the electricity bill shown with a solid line 35 of Fig. 22, and it can be seen that the electricity bill is even less expensive in comparison to the case of Fig. 21.

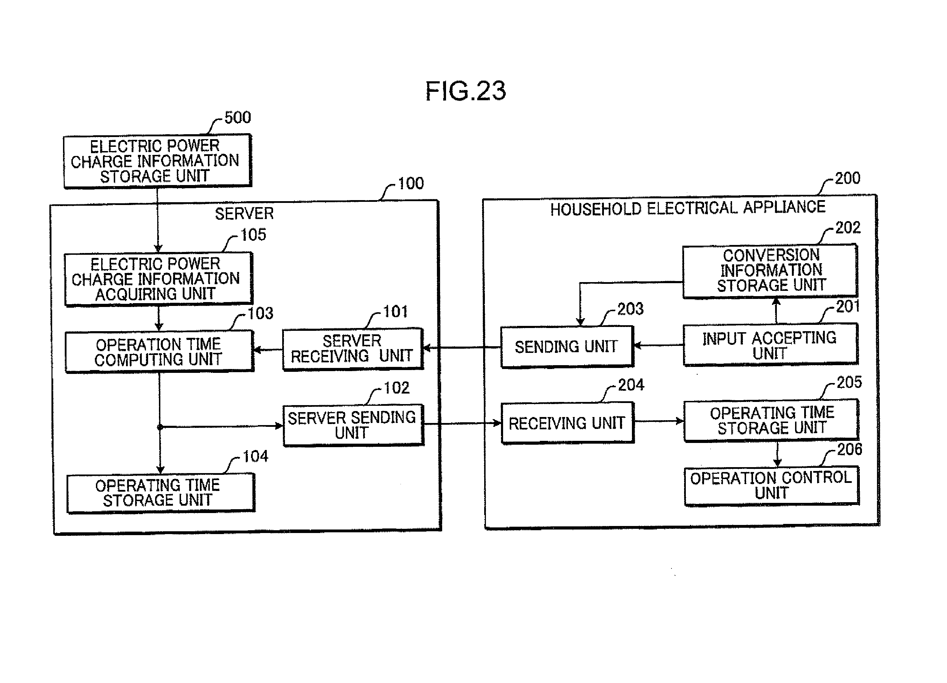

The configuration of the server 100 and the household electrical appliance 200 is now explained. Fig. 23 is a diagram showing the configuration of the server 100 and the household electrical appliance 200 in Embodiment 3 of the present invention. The server 100 comprises, as shown in Fig. 23, a server receiving unit 101, a server sending unit 102, an operation time computing unit 103, an operation time storage unit 104 and an electric power charge information acquiring unit 105.

The server receiving unit 101 receives various types of information sent from the household electrical appliance 200. The server receiving unit 101 receives the desired time information, the electric power information and the tolerance information sent by the household electrical appliance 200. The server sending unit 102 sends, to the household electrical appliance 200, the optimal operation start time or the optimal operation end time of the household electrical appliance 200 that was computed by the operation time computing unit 103.

The electric power charge information acquiring unit 105 acquires the electric power charge information showing the electric power charge which changes per hour. The electric power charge information acquiring unit 105 is connected, via wireless or wired connection, to an electric power charge information storage unit 500 of the electric power company which stores, for example, the electric power charge information showing the current and future electric power charge.

The operation time computing unit 103 creates the optimal usage time plan of the household electrical appliance for realizing reduction of the electricity bill based on the electric power charge information from the electric power charge information storage unit 500, the desired time information sent from the household electrical appliance 200 showing the desired operation end time or the desired operation start time, the tolerance information sent from the household electrical appliance 200 showing the tolerated time range that may be deviated from the desired operation start time or the desired operation end time, the operation period information sent from the household electrical appliance 200 showing the period for which the household electrical appliance 200 needs to be operated, and the electric power information sent from the household electrical appliance 200 showing the electric power required for the household electrical appliance 200 to be operated. In other words, the operation time computing unit 103 computes the operation start time or the operation end time whereby an electricity bill, which is charged when the household electrical appliance 200 is operated, becomes a predetermined charge or less, based on the desired time information, the electric power information and the tolerance information received by the server receiving unit 101, and the electric power charge information acquired by the electric power charge information acquiring unit 105. The operation time computing unit 103 outputs the optimal operation start time or the optimal operation end time of the household electrical appliance 200 to the server sending unit 102 and the operation time storage unit 104.

The operation time storage unit 104 stores the optimal operation start time or the optimal operation end time that is obtained for each household electrical appliance by the operation time computing unit 103.

Note that, while the electric power charge information storage unit 500 is installed outside the server 100 in Fig. 23, the electric power charge information storage unit 500 may also be configured inside the server 100. Moreover, the electric power charge information stored in the electric power charge information storage unit 500 is, for example, the electric power charge Y(t) shown in Fig. 20, Fig. 21 and Fig. 22.

Moreover, the server receiving unit 101 and the server sending unit 102 are not limited to sending and receiving information to and from one household electrical appliance, and may also send and receive information to and from a plurality of household electrical appliances (for instance, to and from the household electrical appliance 300 or the household electrical appliance 400).

The configuration of the household electrical appliance 200 is now explained. The household electrical appliance 200 comprises an input accepting unit 201, a conversion information storage unit 202, a sending unit 203, a receiving unit 204, an operation time storage unit 205 and an operation control unit 206.

The input accepting unit 201 is configured, for example, from an input terminal comprising an operation screen or the like. The input accepting unit 201 outputs information that was input by the user to the conversion information storage unit 202 and the sending unit 203. The input accepting unit 201 accepts the input of the desired time information showing the desired operation start time or the desired operation end time of the household electrical appliance. Moreover, the input accepting unit 201 accepts the input of, in addition to the desired time information, the tolerance information showing the tolerated time range that may be deviated from the desired operation start time or the desired operation end time.

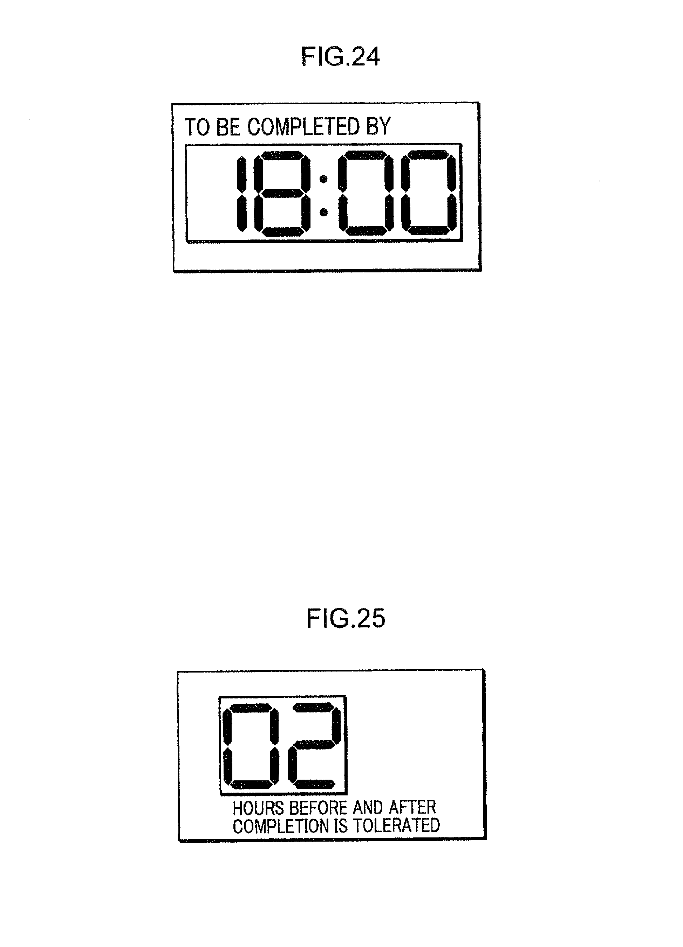

Fig. 24 is a diagram showing a display example of the method of inputting the desired operation end time into the input accepting unit 201 in Embodiment 3 of the present invention, and Fig. 25 is a diagram showing a display example of the method of inputting the tolerance information into the input accepting unit 201 in Embodiment 3 of the present invention. Fig. 24 is a diagram showing a display example for explaining the input method in a case where the household electrical appliance 200 is measuring the time and the time that the operation is to be actually finished is known. The user inputs the actual desired operation end time such as, for example, "18:00". This desired operation end time shows that the user wants the operation to be ended by 18:00, and the user inputs the time that he/she wants the operation to finish.

Fig. 25 is a diagram showing an input example of the tolerance information. In the display example shown in Fig. 25, "02 hours before and after completion is tolerated" is displayed. In the foregoing case, the user is tolerating the operation to end within the span of two hours before and two hours after 18:00, which is the desired operation end time. Moreover, although not shown, when the input value is "0", this show that the user wants the operation to be ended at 18:00 on the dot.

Note that, the input of tolerance information may also be the input of a predetermined level value in addition to designating a specific time as shown in Fig. 25. In other words, the tolerance information may also be represented as a level value (set value) that is pre-set for the tolerated time of deviation from the desired operation start time or the desired operation end time. For example, when the input value is "1", this shows that the operation will end at exactly the desired operation end time. When the input value is "2", the operation will end within one hour before or one hour after the desired operation end time. When the input value is "3", the operation will end within two hours before or two hours after the desired operation end time. In addition, when the input value is "4", the operation will end between the period of one hour before the desired operation end time and the desired operation end time. When the input value is "5", the operation will end between the period from the desired operation end time to one hour after the desired operation end time.

The input method shown in Fig. 24 is similar to the input method of a conventional timer setting method, the input screen is familiar to the user, and the user will not feel inhibited to perform the input operation. Thus, the desired operation end time can be set without having to confuse the user.

Moreover, the information to be input by the user using the input accepting unit 201 is the desired operation end time, the tolerance information, the operation period information representing the period for which the household electrical appliance 200 needs to be operated, and the electric power information representing the electric power required for the operation. Nevertheless, for example, if the household electrical appliance 200 is a washer-dryer and a wash program (standard program, power saving program, speed-up program or the like) is selected by the input accepting unit 201, the operation period information and the electric power information corresponding to the selected wash program can be specified. Thus, the user is not required to input the operation period information and the electric power information. The point is that the user is not required to input the individual pieces of information if it is possible to specify the desired operation end time, the operation period information and the electric power information based on some kind of input information.

The conversion information storage unit 202 stores conversion information for converting the information input by the input accepting unit 201 into operation period information and electric power information. Here, if the information input by the input accepting unit 201 is operating condition information requiring conversion into time information of the wash program or the like, the conversion information storage unit 202 stores a conversion association table which associates the operating condition information, and the operation period information and the electric power information.

In particular, if the household electrical appliance 200 is a washer-dryer, since a plurality of processes (for instance, washing process, rinsing process, dewatering process, drying process, and so on) are sequentially performed during the operation, the operation period information and the electric power information become complex. The electric power information is represented, for example, as the power consumption P(t) shown in Fig. 20 to Fig. 22. The power consumption P(t) (electric power information) is stored in a plurality for each measurement result of the sensor of a wash program, weight of laundry, ambient temperature and the like. Note that the conversion information storage unit 202 may store, in addition to the power consumption P(t), information related to the total amount of power consumption and the like.

The sending unit 203 sends, to the server receiving unit 101 of the server 100, the desired operation end time and the tolerance information input by the input accepting unit 201, and the operation period information and the electric power information stored in the conversion information storage unit 202 corresponding to the operating condition input by the input accepting unit 201.

The receiving unit 204 receives the optimal operation end time or the optimal operation start time sent from the server sending unit 102 of the server 100.

The operation time storage unit 205 stores the optimal operation start time received by the receiving unit 204.

The operation control unit 206 controls the operation of the household electrical appliance 200. The operation control unit 206 starts the operation of the household electrical appliance 200 according to the optimal operation start time or the optimal operation end time sent by the server sending unit 102. The operation control unit 206 outputs a start signal upon reaching the optimal operation end time stored in the operation time storage unit 205, and performs control so as to start the operation of the household electrical appliance 200.

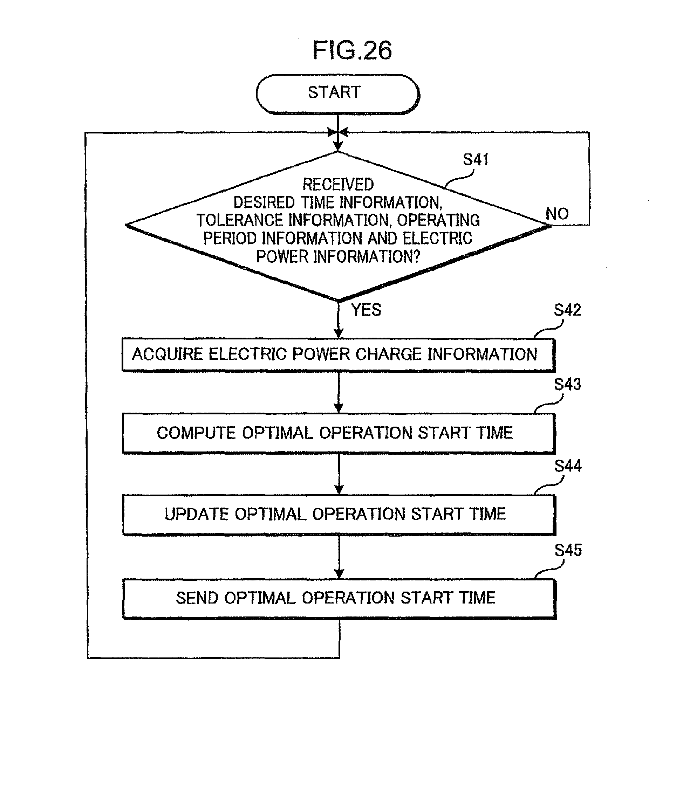

The operation of the server 100 is now explained with reference to the flowchart of Fig. 26. Fig. 26 is a flowchart explaining the operation of the server 100 in Embodiment 3 of the present invention.

After the operation is started, in step S41, the server receiving unit 101 stands by until it receives the desired operation end time information, the tolerance information, the operation period information and the electric power information to be sent from the household electrical appliance 200. In other words, the server receiving unit 101 determines whether the desired time information, the tolerance information, the operation period information and the electric power information sent by the household electrical appliance 200 have been received. Note that the desired operation end time information, the tolerance information, the operation period information and the electric power information are sent not only from the household electrical appliance 200, but also from the household electrical appliance 300 or the household electrical appliance 400, but the explanation thereof is omitted for the sake of convenience. Here, when it is determined that the desired time information, the tolerance information the operation period information and the electric power information have not been received (NO in step S41), the operation enters a standby state, and the determination processing of step S41 is repeated in a predetermined timing until the desired time information, the tolerance information, the operation period information and the electric power information are received.

Meanwhile, when it is determined that the desired time information, the tolerance information, the operation period information and the electric power information have been received (YES in step S41), in step S42, the electric power charge information acquiring unit 105 acquires the electric power charge information showing the electric power charge which changes per hour. Note that the electric power charge information acquiring unit 105 accesses the external server operated by the electric power company and acquires the electric power charge information from the electric power charge information storage unit 500 of that external server, but the electric power charge information acquiring unit 105 may also read the electric power charge information that is stored in advance in an internal memory.

Subsequently, in step S43, the operation time computing unit 103 computes the optimal operation start time whereby an electricity bill, which is charged when the household electrical appliance 200 is operated from the desired operation end time to the time when the tolerance level shown in the tolerance information elapses, becomes a predetermined charge or less, based on the desired time information, the tolerance information, the operation period information and the electric power information received by the server receiving unit 101, and the electric power charge information acquired by the electric power charge information acquiring unit 105. More specifically, the operation time computing unit 103 computes the optimal operation start time whereby an electricity bill, which is charged when the household electrical appliance 200 is operated from the desired operation end time to the time when the tolerance level shown in the tolerance information elapses, becomes the least expensive based on the desired time information, the tolerance information, the operation period information, the electric power information and the electric power charge information. The operation time computing unit 103 outputs the computed optimal operation start time to the server sending unit 102 and the operation time storage unit 104.

The operation time computing unit 103 computes the operation period whereby an electricity bill, which is charged when the household electrical appliance 200 is operated during the period from the current time up to the time obtained by adding the tolerated time to the desired operation end time, becomes the least expensive, based on the desired time information, the tolerance information, the operation period information, the electric power information and the electric power charge information (electric power charge Y(t)), and computes the operation start time based on the foregoing operation period. The operation time computing unit 103 can calculate the electricity bill that is charged when the household electrical appliance 200 is operated by integrating the value obtained by multiplying the hourly electric power charge Y(t) by the electric power P(t) required for the household electrical appliance 200 to be operated, by the operation period from the operation start time to the operation end time within the period from the current time up to the time obtained by adding the tolerated time to the desired operation end time.

Subsequently, in step S44, the operation time computing unit 103 updates the optimal operation start time that was previously computed and stored in the operation time storage unit 104 to the newly computed optimal operation start time.

Subsequently, in step S45, the server sending unit 102 sends, to the household electrical appliance 200, the optimal operation start time that was computed by the operation time computing unit 103.

Note that, in step S43, the operation time computing unit 103 may also determine the optimal operation start time so that the total electricity bill Yt of one day shown in Formula (2) above becomes minimum by using the desired time information, the tolerance information, the operation period information and the electric power information sent from the household electrical appliance 200, the electric power charge information Y(t) acquired by the electric power charge information acquiring unit 105, and the optimal operation start time of the other household electrical appliances 300, 400 that was previously stored in the operation time storage unit 104.

Moreover, depending on the computation result of step S43, there may be cases where the optimal operation start time of the other household electrical appliances 300, 400 needs to be changed in order to minimize the total electricity bill Yt of one day. In the foregoing case, in step S45, the server sending unit 102 also sends the updated optimal operation start time to the other household electrical appliances subject to change other than the household electrical appliance 200.

As a result of operating the operation time computing unit 103 according to the flowchart of Fig. 26, the usage time span of the respective household electrical appliances is determined so as to ensure the comfort of the household electrical appliance network system and realize reduction of the electricity bill. In the flowchart of Fig. 26, the operation time computing unit 103 can obtain the optimal operation start time or the optimal operation start time in cases where the electric power charge changes by performing computation using the electric power charge information from the electric power charge information storage unit 500.

The processing operation of the household electrical appliance 200 is now explained. As the processing operation of the household electrical appliance 200, there are the following processing operations; namely, (1) the processing operation after receiving the optimal operation start time, and (2) the processing operation up until the desired time information, the tolerance information, the operation period information and the electric power information are sent, and the respective processing operations are explained below.

Foremost, in relation to (1) above, when the receiving unit 204 receives the optimal operation start time sent from the server 100, the received optimal operation start time is stored in the operation time storage unit 205. Subsequently, when the current time becomes the optimal operation start time stored in the operation time storage unit 205, the operation control unit 206 starts the operation of the household electrical appliance 200.

Subsequently, in relation to (2) above, when the input accepting unit 201 accepts an input of the desired time information, the tolerance information and the operating condition by the user, the input accepting unit 201 specifies the operation period information and the electric power information corresponding to the operating condition based on the conversion information stored in the conversion information storage unit 202. The sending unit 203 sends the desired time information, the tolerance information and the operation period information and the electric power information to the server 100.

The user's input of the desired time information, the tolerance information and the operating condition using the input accepting unit 201 is not limited to before the start of operation. In order for the user to change the operation program (operating condition) or the operation end time during the operation, in certain cases the input accepting unit 201 also accepts the input of the desired time information, the tolerance information and the operating condition during the operation of the household electrical appliance 200. Accordingly, when the user's input using the input accepting unit 201 is confirmed, the sending unit 203 promptly sends the desired time information, the tolerance information, the operation period information and the electric power information to the server receiving unit 101. In other words, the sending unit 203 sends the desired time information, the tolerance information and the electric power information to the server when input of the desired time information or the tolerance information is accepted by the input accepting unit 201 even if it is during the operation control by the operation control unit 206. The determination of the optimal usage time span of the respective household electrical appliances can thereby be performed promptly by the operation time computing unit 103, and it is possible to further ensure the user's comfort and realize reduction of the electricity bill.

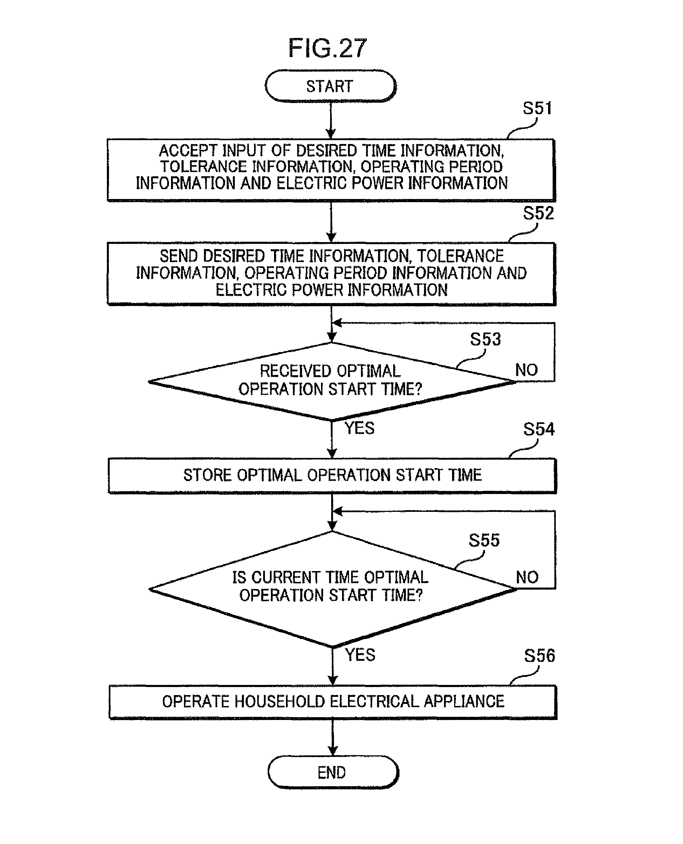

The operation of the household electrical appliance 200 in Embodiment 3 of the present invention is now explained with reference to the flowchart of Fig. 27. Fig. 27 is a flowchart explaining the operation of the household electrical appliance 200 in Embodiment 3 of the present invention.

Foremost, in step S51, the input accepting unit 201 of the household electrical appliance 200 accepts, from the user, the input of the desired time information showing the desired operation end time of the household electrical appliance 200, the tolerance information showing the tolerated time range that may be deviated from the desired operation end time, the operation period information showing the period for which the household electrical appliance 200 needs to be operated, and the electric power information showing the electric power required for the household electrical appliance 200 to be operated. The desired operation end time represents the operation end time of the household electrical appliance 200 desired by the user. For example, the user inputs the desired operation end time of the household electrical appliance 200. The input accepting unit 201 outputs the actual desired operation end time to the sending unit 203. When the number of hours from the current time at which the operation should end is input, the input accepting unit 201 calculates the actual desired operation end time and outputs the desired operation end time to the sending unit 203.

Moreover, the tolerance information is represented as the tolerated time that may be deviated from the desired operation end time. The input accepting unit 201 accepts the input of the tolerated time that may be deviated from the desired operation end time.

Moreover, the information to be input by the user by using the input accepting unit 201 is the desired operation end time, the tolerance information, the operation period information and the electric power information. Nevertheless, when the input accepting unit 201 accepts an input of the operating condition from the user and can specify the desired operation end time, the tolerance information, the operation period information and the electric power information based on the accepted operating condition, the user is not required to input the desired operation end time, the tolerance information, the operation period information and the electric power information.

Moreover, when the input information is information requiring conversion from the operating condition of a wash program or the like, the input accepting unit 201 reads the operation period information and the electric power information associated with the operating condition from the conversion association table of the conversion information storage unit 202.

Subsequently, in step S52, the sending unit 203 sends the desired time information, the tolerance information, the operation period information and the electric power information to the server 100.

Note that the processing of step S53 to step S56 is the same as the processing of step S13 to step S16 of Fig. 10, and the explanation thereof is omitted.

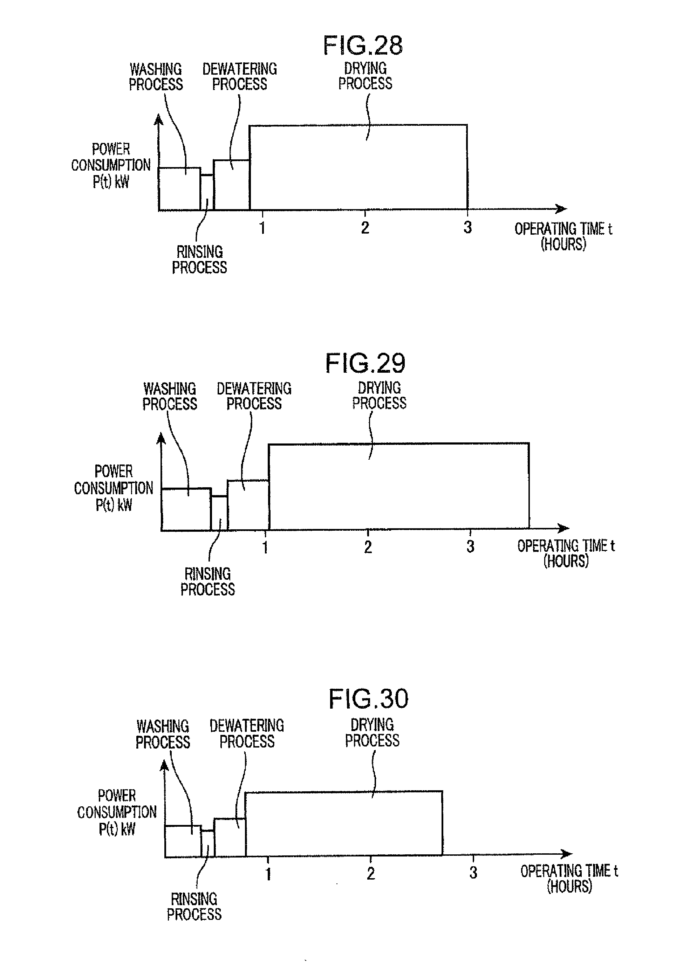

The electric power information sent by the household electrical appliance 200 to the server 100 is now explained in detail. When the household electrical appliance 200 is a washer-dryer, for example, the power consumption $P(t)$ is stored in a plurality for each measurement result of the sensor of a wash program, weight of laundry, ambient temperature and the like as shown in Fig. 28 to Fig. 30.

Fig. 28 to Fig. 30 show the power consumption $P(t)$ when the household electrical appliance 200 is a washer-dryer, order of washing process, rinsing process, dewatering process and drying process as the processes of the washer-dryer, operating time required in the respective processes, and electric power that is consumed in the respective processes. Fig. 28 is a diagram showing the change in the power consumption when the wash program is a standard program and the weight of the clothes to be washed is 3 kg, Fig. 29 is a diagram showing the change in the power consumption when the wash program is a standard program and the weight of the clothes to be washed is 5 kg, and Fig. 30 is a diagram showing the change in the power consumption when the wash program is a cleaning program and the weight of the clothes to be washed is 3 kg. Moreover, in Fig. 28 to Fig. 30, the horizontal axis shows the operating time t with the start time at 0, and the vertical axis shows the power consumption $P(t)$.

As shown in Fig. 28, the power consumption $P(t)$ is not constant, and the power consumption $P(t)$ is largest during the drying process. Thus, it can be understood that the method of operating the drying process of the washer-dryer during the time span that the electric power charge $Y(t)$ is least expensive is valid as the method of reducing the electricity bill. Moreover, as shown in Fig. 29 and Fig. 30, in the case of a washer-dryer, the change in the power consumption relative to the operating time will differ depending on various parameters such as the weight of the clothes to be washed, and the selected wash program such as the standard program, the thorough washing program, the cleaning program or the like.

Accordingly, the power consumption $P(t)$ will change depending on the measurement result of the sensor of the wash program, the weight of the clothes to be washed, the ambient temperature, and so on. Thus, the operation time computing unit 103 determines the usage time span of the respective household electrical appliances so that the total electrical bill Yt computed with Formula (2) will be minimal based on the conditions of the household electrical appliance. Here, more the information of the power consumption $P(t)$ configuring Formula (2), the operation time computing unit 103 can compute the optimal operation start time capable of further reducing the electricity bill. Thus, the household electrical appliance 200 sends the electric power change of the washer-dryer, in which one example thereof is shown in Fig. 28 to Fig. 30, to the operation time computing unit 103 as the electric power information. The operation time computing unit 103 is thereby able to determine the usage time span of the respective household electrical appliance capable of further reducing the electricity bill.

Note that, while not shown in Fig. 23, the household electrical appliance 200 may also comprise a display unit for displaying the information (optimal operation end time or optimal operation start time) sent from the server 100. Accordingly, as a result of notifying the time information to the user, the user can, for example, make preparations for ironing clothes according to the operation start time or the operation end time of the washer-dryer or place dishes in the dishwasher according to the operating start time of the dishwasher, and the overall household chores using household electrical appliances can be performed efficiently. Moreover, since the user can make preparations relative to the operation of the household electrical appliance according to the displayed optimal operation start time and operate the household electrical appliance more reliably, it is possible to realize highly effective equalization of the electric power load and reduction of the electricity bill.

Note that the specific embodiments described above mainly include the invention configured as described below.

The electrical device control system according to one aspect of the present invention is an electrical device control system comprising an electrical device, and a server which is communicably connected to the electrical device, wherein the electrical device includes an input accepting unit for accepting an input of desired time information showing a desired operation start time or a desired operation end time of the electrical device, an electrical device-side sending unit for sending, to the server, the desired time information accepted by the input accepting unit, and electric power information showing an electric power required for the electrical device to be operated, and an operation control unit for controlling the operation of the electrical device, wherein the server includes a server-side receiving unit for receiving the desired time information and the electric power information sent by the electrical device-side sending unit, an electric power charge information acquiring unit for acquiring electric power charge information showing an electric power charge which changes per hour, a computing unit for computing an operation start time or an operation end time of the electrical device based on the desired time information and the electric power information received by the server-side receiving unit, and the electric power charge information acquired by the electric power charge information acquiring unit, and a server-side sending unit for sending, to the electrical device, the operation start time or the operation end time computed by the computing unit, and wherein the operation control unit starts the operation of the electrical device according to the operation start time or the operation end time sent by the server-side sending unit.

According to the foregoing configuration, the input accepting unit accepts an input of desired time information showing a desired operation start time or a desired operation end time of the electrical device. The electrical device-side sending unit sends, to the server, the desired time information accepted by the input accepting unit, and electric power information showing an electric power required for the electrical device to be operated. The operation control unit controls the operation of the electrical device. The server-side receiving unit receives the desired time information and the electric power information sent by the electrical device-side sending unit. The electric power charge information acquiring unit acquires electric power charge information showing an electric power charge which changes per hour. The computing unit computes an operation start time or an operation end time of the electrical device based on the desired time information and the electric power information received by the server-side receiving unit, and the electric power charge information acquired by the electric power charge information acquiring unit. The server-side sending unit sends, to the electrical device, the operation start time or the operation end time computed by the computing unit. The operation control unit starts the operation of the electrical device according to the operation start time or the operation end time sent by the server-side sending unit.

Accordingly, since the desired time information showing the desired operation start time or the desired operation end time of the electrical device and the electric power information showing the electric power required for the electrical device to be operated are received, and the operation start time or the operation end time of the electrical device is computed based on the received desired time information, electric power information and electric power charge information, even if the desired time information and the electric power information are changed, it is possible to compute the operation start time or the operation end time corresponding to the changed desired time information and electric power information, and equalization of the electric power load and reduction of the electricity bill can be realized in real-time.

Moreover, in the foregoing electrical device control system, preferably, the electric power information is electric power information which is linked to time information.

According to the foregoing configuration, since the operation start time or the operation end time is computed using electric power information which is linked to the time information; that is, electric power information showing the time change of the electric power of the electrical device, further equalization of the electric power load and reduction of the electricity bill can be realized.

Moreover, in the foregoing electrical device control system, preferably, the computing unit computes the operation start time or the operation end time whereby an electricity bill, which is charged when the electrical device is operated up to the desired operation end time, becomes a predetermined charge or less.

According to the foregoing configuration, since the computing unit computes the operation start time or the operation end time whereby an electricity bill, which is charged when the electrical device is operated up to the desired operation end time, becomes a predetermined charge or less, it is possible to determine the operation start time or the operation end time which enables further reduction of the electricity bill.

Moreover, in the foregoing electrical device control system, preferably, the input accepting unit accepts, together with the desired time information, tolerance level information showing a tolerance level of deviation from the desired operation start time or the desired operation end time, the electrical device-side sending unit sends to the server, together with the desired time information and the electric power information, the tolerance level information accepted by the input accepting unit, the server-side receiving unit receives the desired time information, the electric power information and the tolerance level information sent by the electrical device-side sending unit, and the computing unit computes the operation start time or the operation end time of the electrical device based on the desired time information, the tolerance level information and the electric power information received by the server-side receiving unit, and the electric power charge information acquired by the electric power charge information acquiring unit.

According to the foregoing configuration, the input accepting unit accepts, together with the desired time information, tolerance level information showing a tolerance level of deviation from the desired operation start time or the desired operation end time. The electrical device-side sending unit sends to the server, together with the desired time information and the electric power information, the tolerance level information accepted by the input accepting unit. The server-side receiving unit receives the desired time information, the electric power information and the tolerance level information sent by the electrical device-side sending unit. The computing unit computes the operation start time or the operation end time of the electrical device based on the desired time information, the tolerance level information and the electric power information received by the server-side receiving unit, and the electric power charge information acquired by the electric power charge information acquiring unit.

Accordingly, as a result of additionally using the tolerance level information showing a tolerance level of deviation from the desired operation start time or the desired operation end time, it is possible to more flexibly determine the operation start time or the operation end time.

Moreover, in the foregoing electrical device control system, preferably, the tolerance level information is represented as a tolerated time of deviation from the desired operation start time or the desired operation end time.

According to the foregoing configuration, since the tolerance level information is represented as a tolerated time of deviation from the desired operation start time or the desired operation end time, the user can input the tolerance level information using an input method that is familiar to the user.

Moreover, in the foregoing electrical device control system, preferably, the tolerance level information is represented as a level value which is pre-set for a tolerated time of deviation from the desired operation start time or the desired operation end time.

According to the foregoing configuration, since the tolerance level information is represented as a level value which is pre-set for a tolerated time of deviation from the desired operation start time or the desired operation end time, the user can input the tolerance level information with a simple input method.

Moreover, in the foregoing electrical device control system, preferably, the electrical device-side sending unit sends, to the server, the desired time information and the electric power information when the input accepting unit accepts the input of the desired time information, even during an operational control performed by the operation control unit.

According to the foregoing configuration, the electrical device-side sending unit sends, to the server, the desired time information and the electric power information when the input accepting unit accepts the input of the desired time information, even during an operational control performed by the operation control unit.

Accordingly, even when the desired time information and the electric power information are changed by the user during the operation, it is possible to compute the operation start time or the operation end time corresponding to the changed desired time information and the electric power information.

Moreover, in the foregoing electrical device control system, preferably, the electrical device further includes a display unit for displaying the operation start time or the operation end time sent by the server-side sending unit.

According to the foregoing configuration, since the display unit displays the operation start time or the operation end time sent by the server-side sending unit, the user can confirm the operation start time or the operation end time.

Moreover, in the foregoing electrical device control system, preferably, the electrical device further includes a user rejection accepting unit for accepting whether or not to reject the operation start time or the operation end time displayed on the display unit, and the electrical device-side sending unit sends a re-computation request for requesting the server to re-compute the operation start time or the operation end time when the operation start time or the operation end time is rejected by the user rejection accepting unit.

According to the foregoing configuration, the user rejection accepting unit accepts whether or not to reject the operation start time or the operation end time displayed on the display unit. The user rejection accepting unit sends a re-computation request for requesting the server to re-compute the operation start time or the operation end time when the operation start time or the operation end time is rejected by the user rejection accepting unit.

Accordingly, since whether or not to reject the operation start time or the operation end time displayed by the display unit is accepted, the user can reject the operation start time or the operation end time computed by the server, and it is thereby possible to improve the user-friendliness of the user.

Moreover, in the foregoing electrical device control system, preferably, the server-side receiving unit receives the re-computation request sent by the electrical device-side sending unit, and the computing unit re-computes the operation start time or the operation end time of the electrical device when the re-computation request is received by the server-side receiving unit.

According to the foregoing configuration, the server-side receiving unit receives the re-computation request sent by the electrical device-side sending unit. The computing unit re-computes the operation start time or the operation end time of the electrical device when the re-computation request is received by the server-side receiving unit.

Accordingly, since the operation start time or the operation end time of the electrical device is re-computed when the operation start time or the operation end time is rejected, it is possible to present a new operation start time or the operation end time to the user.

Moreover, in the foregoing electrical device control system, preferably, the operation control unit starts the operation of the electrical device irrespective of the operation start time or the operation end time from the server when the operation start time or the operation end time is rejected by the user rejection accepting unit.

According to the foregoing configuration, the operation control unit starts the operation of the electrical device irrespective of the operation start time or the operation end time from the server when the operation start time or the operation end time is rejected by the user rejection accepting unit.

Accordingly, it is possible to operate the electrical device irrespective of the operation start time or the operation end time from the server even when the operation start time or the operation end time is rejected, and thereby improve the user-friendliness of the user.

The server according to another aspect of the present invention is a server which is communicably connected to an electrical device, comprising a receiving unit for receiving desired time information sent from the electrical device and showing a desired operation start time or a desired operation end time of the electrical device, and electric power information sent from the electrical device and showing an electric power required for the electrical device to be operated, an electric power charge information acquiring unit for acquiring electric power charge information showing an electric power charge which changes per hour, a computing unit for computing an operation start time or an operation end time of the electrical device based on the desired time information and the electric power information received by the receiving unit, and the electric power charge information acquired by the electric power charge information acquiring unit, and a sending unit for sending, to the electrical device, the operation start time or the operation end time computed by the computing unit.

According to the foregoing configuration, the receiving unit receives desired time information sent from the electrical device and showing a desired operation start time or a desired operation end time of the electrical device, and electric power information sent from the electrical device and showing an electric power required for the electrical device to be operated. The electric power charge information acquiring unit acquires electric power charge information showing an electric power charge which changes per hour. The computing unit computes an operation start time or an operation end time of the electrical device based on the desired time information and the electric power information received by the receiving unit, and the electric power charge information acquired by the electric power charge information acquiring unit. The sending unit sends, to the electrical device, the operation start time or the operation end time computed by the computing unit.

Accordingly, since the desired time information showing the desired operation start time or the desired operation end time of the electrical device, and the electric power information showing the electric power required for the electrical device to be operated are received, and the operation start time or the operation end time of the electrical device is computed based on the received desired time information, electric power information and electric power charge information, even if the desired time information and the electric power information are changed, it is possible to compute the operation start time or the operation end time corresponding to the changed desired time information and electric power information, and equalization of the electric power load and reduction of the electricity bill can be realized in real-time.

The electrical device according to another aspect of the present invention is an electrical device, comprising an input accepting unit for accepting an input of desired time information showing a desired operation start time or a desired operation end time of the electrical device, a sending unit for sending, to a server, the desired time information accepted by the input accepting unit, and electric power information showing an electric power required for the electrical device to be operated, a receiving unit for receiving an operation start time or an operation end time of the electrical device sent by the server which receives the desired time information and the electric power information sent by the sending unit, acquires electric power charge information showing an electric power charge which changes per hour, computes the operation start time or the operation end time based on the received desired time information and electric power information, and the acquired electric power charge information, and sends the computed operation start time or the operation end time to the electrical device, and an operation control unit for starting the operation of the electrical device according to the operation start time or the operation end time received by the receiving unit.

According to the foregoing configuration, the input accepting unit accepts an input of desired time information showing a desired operation start time or a desired operation end time of the electrical device. The sending unit sends, to a server, the desired time information accepted by the input accepting unit, and electric power information showing an electric power required for the electrical device to be operated. The server receives the desired time information and the electric power information sent by the sending unit, acquires electric power charge information showing an electric power charge which changes per hour, computes an operation start time or an operation end time of the electrical device based on the received desired time information and electric power information, and the acquired electric power charge information, and sends the computed operation start time or the operation end time to the electrical device. The receiving unit receives the operation start time or the operation end time sent by the server. The operation control unit starts the operation of the electrical device according to the operation start time or the operation end time received by the receiving unit.

Accordingly, since the desired time information showing the desired operation start time or the desired operation end time of the electrical device, and the electric power information showing the electric power required for the electrical device to be operated are received, and the operation start time or the operation end time of the electrical device is computed based on the received desired time information, electric power information and electric power charge information, even if the desired time information and the electric power information are changed, it is possible to compute the operation start time or the operation end time corresponding to the changed desired time information and electric power information, and equalization of the electric power load and reduction of the electricity bill can be realized in real-time.

The electrical device control method according to another aspect of the present invention is an electrical device control method performed by an electrical device control system provided with an electrical device, and a server which is communicably connected to the electrical device, the method comprising an input accepting step of an input accepting unit of the electrical device accepting an input of desired time information showing a desired operation start time or a desired operation end time of the electrical device, a first sending step of an electrical device-side sending unit of the electrical device sending, to the server, the desired time information accepted in the input accepting step, and electric power information showing an electric power required for the electrical device to be operated, a receiving step of a server-side receiving unit of the server receiving the desired time information and the electric power information sent in the first sending step, an electric power charge information acquiring step of an electric power charge information acquiring unit of the server acquiring electric power charge information showing an electric power charge which changes per hour, a computing step of a computing unit of the server computing an operation start time or an operation end time of the electrical device based on the desired time information and the electric power information received in the receiving step, and the electric power charge information acquired in the electric power charge information acquiring step, a second sending step of a server-side sending unit of the server sending, to the electrical device, the operation start time or the operation end time computed in the computing step, and an operation control step of an operation control unit of the electrical device starting the operation of the electrical device according to the operation start time or the operation end time sent in the second sending step.

According to the foregoing configuration, in the input accepting step, an input accepting unit of the electrical device accepts an input of desired time information showing a desired operation start time or a desired operation end time of the electrical device. In the first sending step, an electrical device-side sending unit of the electrical device sends, to the server, the desired time information accepted in the input accepting step, and electric power information showing an electric power required for the electrical device to be operated. In the receiving step, a server-side receiving unit of the server receives the desired time information and the electric power information sent in the first sending step. In the electric power charge information acquiring step, an electric power charge information acquiring unit of the server acquires electric power charge information showing an electric power charge which changes per hour. In the computing step, a computing unit of the server computes an operation start time or an operation end time of the electrical device based on the desired time information and the electric power information received in the receiving step, and the electric power charge information acquired in the electric power charge information acquiring step. In the second sending step, a server-side sending unit of the server sends, to the electrical device, the operation start time or the operation end time computed in the computing step. In the operation control step, an operation control unit of the electrical device starts the operation of the electrical device according to the operation start time or the operation end time sent in the second sending step.

Accordingly, since the desired time information showing the desired operation start time or the desired operation end time of the electrical device, and the electric power information showing the electric power required for the electrical device to be operated are received, and the operation start time or the operation end time of the electrical device is computed based on the received desired time information, electric power information and electric power charge information, even if the desired time information and the electric power information are changed, it is possible to compute the operation start time or the operation end time corresponding to the changed desired time information and electric power information, and equalization of the electric power load and reduction of the electricity bill can be realized in real-time.

Note that the specific embodiments and examples in the section of Description of Embodiments are first and foremost described for clarifying the technical contents of the present invention, and the present invention should not be narrowly interpreted by being limited to such specific examples, and may be variously modified and implemented within the spirit and scope of claims of the present invention.

Industrial Applicability

The electrical device control system, the server, the electrical device and the electrical device control method according to the present invention can be applied to small domestic systems and large non-domestic systems, and can also be applied to small domestic systems and large non-domestic systems from the perspective of power saving.

**Claims**

1. An electrical device control system comprising an electrical device, and a server which is communicably connected to the electrical device,
   wherein the electrical device includes:

   an input accepting unit for accepting an input of desired time information showing a desired operation start time or a desired operation end time of the electrical device;
   an electrical device-side sending unit for sending, to the server, the desired time information accepted by the input accepting unit, and electric power information showing an electric power required for the electrical device to be operated; and
   an operation control unit for controlling the operation of the electrical device,

   wherein the server includes:

   a server-side receiving unit for receiving the desired time information and the electric power information sent by the electrical device-side sending unit;
   an electric power charge information acquiring unit for acquiring electric power charge information showing an electric power charge which changes per hour;
   a computing unit for computing an operation start time or an operation end time of the electrical device based on the desired time information and the electric power information received by the server-side receiving unit, and the electric power charge information acquired by the electric power charge information acquiring unit; and
   a server-side sending unit for sending, to the electrical device, the operation start time or the operation end time computed by the computing unit, and
   wherein the operation control unit starts the operation of the electrical device according to the operation start time or the operation end time sent by the server-side sending unit.

2. The electrical device control system according to claim 1,
   wherein the electric power information is electric power information which is linked to time information.

3. The electrical device control system according to claim 1 or claim 2,
   wherein the computing unit computes the operation start time or the operation end time whereby an electricity bill, which is charged when the electrical device is operated up to the desired operation end time, becomes a predetermined charge or less.

4. The electrical device control system according to claim 1 or claim 2,
   wherein the input accepting unit accepts, together with the desired time information, tolerance level information showing a tolerance level of deviation from the desired operation start time or the desired operation end time,
   the electrical device-side sending unit sends to the server, together with the desired time information and the electric power information, the tolerance level information accepted by the input accepting unit,
   the server-side receiving unit receives the desired time information, the electric power information and the tolerance level information sent by the electrical device-side sending unit, and
   the computing unit computes the operation start time or the operation end time of the electrical device based on the desired time information, the tolerance level information and the electric power information received by the server-side receiving unit, and the electric power charge information acquired by the electric power charge information acquiring unit.

**5.** The electrical device control system according to claim 4,
wherein the tolerance level information is represented as a tolerated time of deviation from the desired operation start time or the desired operation end time.

**6.** The electrical device control system according to claim 4,
wherein the tolerance level information is represented as a level value which is pre-set for a tolerated time of deviation from the desired operation start time or the desired operation end time.

**7.** The electrical device control system according to any one of claims 1 to 6,
wherein the electrical device-side sending unit sends, to the server, the desired time information and the electric power information when the input accepting unit accepts the input of the desired time information, even during an operational control performed by the operation control unit.

**8.** The electrical device control system according to any one of claims 1 to 7,
wherein the electrical device further includes a display unit for displaying the operation start time or the operation end time sent by the server-side sending unit.

**9.** The electrical device control system according to claim 8,
wherein the electrical device further includes a user rejection accepting unit for accepting whether or not to reject the operation start time or the operation end time displayed on the display unit, and
the electrical device-side sending unit sends a re-computation request for requesting the server to re-compute the operation start time or the operation end time when the operation start time or the operation end time is rejected by the user rejection accepting unit.

**10.** The electrical device control system according to claim 9,
wherein the server-side receiving unit receives the re-computation request sent by the electrical device-side sending unit, and
the computing unit re-computes the operation start time or the operation end time of the electrical device when the re-computation request is received by the server-side receiving unit.

**11.** The electrical device control system according to claim 9,
wherein the operation control unit starts the operation of the electrical device irrespective of the operation start time or the operation end time from the server when the operation start time or the operation end time is rejected by the user rejection accepting unit.

**12.** A server which is communicably connected to an electrical device, comprising:

a receiving unit for receiving desired time information sent from the electrical device and showing a desired operation start time or a desired operation end time of the electrical device, and electric power information sent from the electrical device and showing an electric power required for the electrical device to be operated;
an electric power charge information acquiring unit for acquiring electric power charge information showing an electric power charge which changes per hour;
a computing unit for computing an operation start time or an operation end time of the electrical device based on the desired time information and the electric power information received by the receiving unit, and the electric power charge information acquired by the electric power charge information acquiring unit; and
a sending unit for sending, to the electrical device, the operation start time or the operation end time computed by the computing unit.

**13.** An electrical device, comprising:

an input accepting unit for accepting an input of desired time information showing a desired operation start time or a desired operation end time of the electrical device;
a sending unit for sending, to a server, the desired time information accepted by the input accepting unit, and electric power information showing an electric power required for the electrical device to be operated;
a receiving unit for receiving an operation start time or an operation end time of the electrical device sent by the server which receives the desired time information and the electric power information sent by the sending unit, acquires electric power charge information showing an electric power charge which changes per hour, computes the operation start time or the operation end time based on the received desired time information and electric power information, and the acquired electric power charge information, and sends the computed operation start time or the operation end time to the electrical device; and

an operation control unit for starting the operation of the electrical device according to the operation start time or the operation end time received by the receiving unit.

14. An electrical device control method performed by an electrical device control system provided with an electrical device, and a server which is communicably connected to the electrical device, the method comprising:

an input accepting step of an input accepting unit of the electrical device accepting an input of desired time information showing a desired operation start time or a desired operation end time of the electrical device;

a first sending step of an electrical device-side sending unit of the electrical device sending, to the server, the desired time information accepted in the input accepting step, and electric power information showing an electric power required for the electrical device to be operated;

a receiving step of a server-side receiving unit of the server receiving the desired time information and the electric power information sent in the first sending step;

an electric power charge information acquiring step of an electric power charge information acquiring unit of the server acquiring electric power charge information showing an electric power charge which changes per hour;

a computing step of a computing unit of the server computing an operation start time or an operation end time of the electrical device based on the desired time information and the electric power information received in the receiving step, and the electric power charge information acquired in the electric power charge information acquiring step;

a second sending step of a server-side sending unit of the server sending, to the electrical device, the operation start time or the operation end time computed in the computing step; and

an operation control step of an operation control unit of the electrical device starting the operation of the electrical device according to the operation start time or the operation end time sent in the second sending step.

# FIG.1

SERVER ~100

HOUSEHOLD
ELECTRICAL
APPLIANCE ~200

HOUSEHOLD
ELECTRICAL
APPLIANCE ~300

HOUSEHOLD
ELECTRICAL
APPLIANCE ~400

# FIG.2

SERVER 100                          HOUSEHOLD ELECTRICAL
                                           APPLIANCE200

DESIRED OPERATION END TIME

OPTIMAL OPERATION START TIME

# FIG.3

PREPARATION
COMPLETION TIME

ELECTRICAL
POWER
CHARGE
Y(t)
yen/kWh

TIME t

0:00          6:00          12:00          18:00          24:00

POWER
CONSUMPTION
P(t) kW

20

21

TIME t

0:00          6:00   9:00   12:00   16:00          24:00
                              13:00          18:00

# FIG.4

PREPARATION COMPLETION TIME

ELECTRICAL POWER CHARGE Y(t) yen/kWh

TIME t

0:00    6:00    12:00    18:00    24:00

POWER CONSUMPTION P(t) kW

23

TIME t

0:00    6:00    9:00    12:00    16:00    24:00

13:00    18:00

22

# FIG.5

PREPARATION
COMPLETION TIME

DESIRED OPERATION
END TIME

ELECTRICAL
POWER
CHARGE
Y(t)
yen/kWh

TIME t

0:00     6:00     12:00     18:00     24:00

POWER
CONSUMPTION
P(t) kW

25

TIME t

0:00     6:00    9:00    12:00       24:00

11:00    14:00    18:00

24

# FIG.6

SERVER 100

ELECTRIC POWER CHARGE INFORMATION STORAGE UNIT 500

ELECTRIC POWER CHARGE INFORMATION ACQUIRING UNIT 105

OPERATION TIME COMPUTING UNIT 103

SERVER RECEIVING UNIT 101

SERVER SENDING UNIT 102

OPERATING TIME STORAGE UNIT 104

HOUSEHOLD ELECTRICAL APPLIANCE 200

CONVERSION INFORMATION STORAGE UNIT 202

SENDING UNIT 203

INPUT ACCEPTING UNIT 201

RECEIVING UNIT 204

OPERATING TIME STORAGE UNIT 205

OPERATION CONTROL UNIT 206

EP 2 570 977 A1

# FIG.7

TO BE COMPLETED BY

18:00

# FIG.8

TO BE COMPLETED WITHIN

02 HOURS

# FIG.9

START

S1

RECEIVED
DESIRED TIME INFORMATION,
OPERATING PERIOD INFORMATION AND
ELECTRIC POWER INFORMATION?

NO

YES

S2

ACQUIRE ELECTRIC POWER CHARGE INFORMATION

S3

COMPUTE OPTIMAL OPERATION START TIME

S4

UPDATE OPTIMAL OPERATION START TIME

S5

SEND OPTIMAL OPERATION START TIME

# FIG.10

```
        ┌─────────────┐
        │    START    │
        └──────┬──────┘
               │                                    S11
               ▼
┌──────────────────────────────────────────────────┐
│ ACCEPT INPUT OF DESIRED TIME INFORMATION, OPERATING│
│ PERIOD INFORMATION AND ELECTRIC POWER INFORMATION  │
└──────────────────────┬─────────────────────────────┘
                       │                            S12
                       ▼
┌──────────────────────────────────────────────────┐
│   SEND DESIRED TIME INFORMATION, OPERATING PERIOD  │
│   INFORMATION AND ELECTRIC POWER INFORMATION       │
└──────────────────────┬─────────────────────────────┘
                       │
                       ▼
              RECEIVED                    S13
        OPTIMAL OPERATION START TIME?  ──────── NO
                       │ YES
                       ▼                           S14
┌──────────────────────────────────────────────────┐
│        STORE OPTIMAL OPERATION START TIME          │
└──────────────────────┬─────────────────────────────┘
                       │
                       ▼
              IS CURRENT                  S15
        TIME OPTIMAL OPERATION START TIME? ────── NO
                       │ YES
                       ▼                           S16
┌──────────────────────────────────────────────────┐
│      OPERATE HOUSEHOLD ELECTRICAL APPLIANCE        │
└──────────────────────┬─────────────────────────────┘
                       │
                       ▼
                ┌─────────────┐
                │     END     │
                └─────────────┘
```

# FIG.11

# FIG.12

# FIG.13

# FIG.14

EP 2 570 977 A1

## FIG.15

210

SCHEDULED TO START AT

**17:00**

211

NO

## FIG.16

210

SCHEDULED TO START IN

**03** HOURS

211

NO

# FIG.17

```
        ┌─────────────┐
        │    START    │
        └──────┬──────┘
               │
               ▼
          ╱─────────╲              S21
        ╱   RECEIVED   ╲      NO
       ╱ REJECTION SIGNAL? ╲──────────┐
        ╲               ╱             │
          ╲─────────╱                 │
               │ YES                  │
               │            S22       │
               ▼                      │
      ┌──────────────────┐            │
      │  RE-COMPUTE OPTIMAL │          │
      │ OPERATION START TIME │         │
      └──────────┬─────────┘          │
                 │          S23       │
                 ▼                    │
      ┌──────────────────┐            │
      │ UPDATE OPTIMAL OPERATION │     │
      │     START TIME    │           │
      └──────────┬─────────┘          │
                 │          S24       │
                 ▼                    │
      ┌──────────────────┐            │
      │ SEND OPTIMAL OPERATION │       │
      │     START TIME    │           │
      └──────────┬─────────┘          │
                 │                    │
                 └────────────────────┘
```

## FIG.18

START

S31
RECEIVED REJECTION SIGNAL? — NO

YES — S32

DELETE OPTIMAL OPERATION START TIME

S33

UPDATE OPTIMAL OPERATION START TIME

S34

SEND OPTIMAL OPERATION START TIME

# FIG.19

SERVER 100                       HOUSEHOLD ELECTRICAL APPLIANCE200

DESIRED OPERATION END TIME AND TOLERANCE INFORMATION

OPTIMAL OPERATION START TIME

EP 2 570 977 A1

FIG.20

# FIG.21

PREPARATION COMPLETION TIME

DESIRED OPERATION END TIME

ELECTRICAL POWER CHARGE Y(t) yen/kWh

TIME t

0:00    6:00    12:00    18:00    24:00

POWER CONSUMPTION P(t) kW

33

TIME t

0:00    6:00    9:00    14:00    18:00    24:00

11:00    16:00

32

# FIG.22

PREPARATION
COMPLETION TIME

DESIRED OPERATION
END TIME

ELECTRICAL
POWER
CHARGE
Y(t)
yen/kWh

TIME t

0:00    6:00    12:00    18:00    24:00

POWER
CONSUMPTION
P(t) kW

TIME DIFFERENCE $\Delta T$
(TOLERANCE
INFORMATION)

35

TIME t

0:00    6:00    9:00    12:00    15:00    24:00

18:00

34

# FIG.23

EP 2 570 977 A1

EP 2 570 977 A1

## FIG.24

TO BE COMPLETED BY

18:00

## FIG.25

02

HOURS BEFORE AND AFTER
COMPLETION IS TOLERATED

46

## FIG.26

START

S41

RECEIVED
DESIRED TIME INFORMATION,
TOLERANCE INFORMATION, OPERATING
PERIOD INFORMATION AND ELECTRIC
POWER INFORMATION?

NO

YES

S42

ACQUIRE ELECTRIC POWER CHARGE INFORMATION

S43

COMPUTE OPTIMAL OPERATION START TIME

S44

UPDATE OPTIMAL OPERATION START TIME

S45

SEND OPTIMAL OPERATION START TIME

# FIG.27

```
                    ┌──────────┐
                    │  START   │
                    └──────────┘
                         │
                         ▼
    ┌────────────────────────────────────────────┐  S51
    │ ACCEPT INPUT OF DESIRED TIME INFORMATION,   │
    │ TOLERANCE INFORMATION, OPERATING PERIOD     │
    │ INFORMATION AND ELECTRIC POWER INFORMATION  │
    └────────────────────────────────────────────┘
                         │
                         ▼
    ┌────────────────────────────────────────────┐  S52
    │ SEND DESIRED TIME INFORMATION, TOLERANCE    │
    │ INFORMATION, OPERATING PERIOD INFORMATION AND│
    │ ELECTRIC POWER INFORMATION                   │
    └────────────────────────────────────────────┘
                         │
                         ▼
              ╱────────────────────╲        S53
             ╱  RECEIVED OPTIMAL    ╲    NO
             ╲  OPERATION START TIME?╱──────┐
              ╲────────────────────╱        │
                    │ YES                   │
                    ▼                       │
    ┌────────────────────────────────────────────┐  S54
    │     STORE OPTIMAL OPERATION START TIME      │
    └────────────────────────────────────────────┘
                         │
                         ▼
              ╱────────────────────╲        S55
             ╱  IS CURRENT TIME OPTIMAL╲  NO
             ╲  OPERATION START TIME?  ╱──────┐
              ╲────────────────────╱          │
                    │ YES                     │
                    ▼                         │
    ┌────────────────────────────────────────────┐  S56
    │    OPERATE HOUSEHOLD ELECTRICAL APPLIANCE   │
    └────────────────────────────────────────────┘
                         │
                         ▼
                    ┌──────────┐
                    │   END    │
                    └──────────┘
```

## FIG.28

## FIG.29

## FIG.30

<table>
<tr><td colspan="2" align="center">**INTERNATIONAL SEARCH REPORT**</td><td colspan="2">International application No.<br>PCT/JP2011/002630</td></tr>
</table>

A. CLASSIFICATION OF SUBJECT MATTER
*G06Q10/00*(2006.01)i, *H02J13/00*(2006.01)i

According to International Patent Classification (IPC) or to both national classification and IPC

B. FIELDS SEARCHED

Minimum documentation searched (classification system followed by classification symbols)
G06Q10/00, H02J13/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-41808 A (Matsushita Electric Industrial Co., Ltd.),<br>12 February 1999 (12.02.1999),<br>entire text; all drawings<br>(Family: none) | 1-14 |
| A | JP 2008-67473 A (The Chugoku Electric Power Co., Inc.),<br>21 March 2008 (21.03.2008),<br>entire text; all drawings<br>(Family: none) | 1-14 |
| A | JP 2006-25474 A (The Chugoku Electric Power Co., Inc.),<br>06 December 2006 (06.12.2006),<br>entire text; all drawings<br>(Family: none) | 1-14 |

☒ Further documents are listed in the continuation of Box C.　　☐ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>15 June, 2011 (15.06.11) | Date of mailing of the international search report<br>28 June, 2011 (28.06.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/002630 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-369383 A  (Hitachi, Ltd.), 20 December 2002 (20.12.2002), entire text; all drawings (Family: none) | 1-14 |
| A | JP 6-98463 A  (Mitsubishi Electric Corp.), 08 April 1994 (08.04.1994), entire text; all drawings (Family: none) | 1-14 |
| A | JP 2010-16989 A  (Sharp Corp.), 21 January 2010 (21.01.2010), entire text; all drawings (Family: none) | 1-14 |
| A | JP 11-313441 A  (Toshiba Corp., Toshiba AVE Co., Ltd.), 09 November 1999 (09.11.1999), entire text; all drawings (Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02052778 B

- JP 2008067473 A